(19) Europäisches Patentamt
European Patent Office
Office européen des brevets

(11) **EP 2 782 967 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **13756347.4**

(22) Anmeldetag: **20.08.2013**

(51) Int Cl.:
*C09D 7/12* (2006.01)    *C09D 7/14* (2006.01)
*C09D 5/02* (2006.01)    *C09D 5/03* (2006.01)
*C09D 5/08* (2006.01)    *C09D 5/10* (2006.01)
*C09D 5/44* (2006.01)    *C22C 1/04* (2006.01)
*C22C 1/10* (2006.01)    *C22C 18/00* (2006.01)

(86) Internationale Anmeldenummer:
**PCT/EP2013/067332**

(87) Internationale Veröffentlichungsnummer:
**WO 2014/029779 (27.02.2014 Gazette 2014/09)**

(54) **ZINK-MAGNESIUM-KORROSIONSSCHUTZPIGMENTE, KORROSIONSSCHUTZLACK UND VERFAHREN ZUR HERSTELLUNG DER KORROSIONSSCHUTZPIGMENTE**

ZINC-MAGNESIUM ANTICORROSION PIGMENTS, ANTICORROSION PAINT, AND METHOD FOR THE PRODUCTION OF SAID ANTICORROSION PIGMENTS

PIGMENTS ANTI-CORROSION À BASE DE ZINC ET DE MAGNÉSIUM, PEINTURE ANTI-CORROSION ET PROCÉDÉ DE PRODUCTION DES PIGMENTS ANTI-CORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2012 DE 102012107634**

(43) Veröffentlichungstag der Anmeldung:
**01.10.2014 Patentblatt 2014/40**

(73) Patentinhaber: **Eckart GmbH**
**91235 Hartenstein (DE)**

(72) Erfinder:
• **RUPPRECHT, Markus**
**92265 Edelsfeld (DE)**
• **WOLFRUM, Christian**
**91052 Erlangen (DE)**
• **PFAMMATTER, Dominik**
**CH-3952 Susten (CH)**
• **HUBNER, Sandra**
**91235 Velden (DE)**
• **CONSTANTIN, Laurent**
**CH-1974 Arbaz (CH)**
• **DECELLES, Guy**
**CH-1926 Fully (CH)**
• **VOIT, Thomas**
**91275 Auerbach (DE)**
• **HAFNER, Horst**
**91247 Vorra (DE)**

(74) Vertreter: **Louis Pöhlau Lohrentz**
**Patentanwälte**
**Postfach 30 55**
**90014 Nürnberg (DE)**

(56) Entgegenhaltungen:
DE-A1-102009 052 399    JP-A- 2000 080 309
JP-A- 2008 223 137    JP-A- 2011 037 949

• BATTOCCHI D ET AL: "Electrochemical behaviour of a Mg-rich primer in the protection of Al alloys", CORROSION SCIENCE, OXFORD, GB, Bd. 48, Nr. 5, 1. Mai 2006 (2006-05-01), Seiten 1292-1306, XP028025695, ISSN: 0010-938X, DOI: 10.1016/J.CORSCI.2005.04.008 [gefunden am 2006-05-01]

**Beschreibung**

Die vorliegende Erfindung betrifft plättchenförmige Korrosionsschutzpigmente, eine Korrosionsschutzbeschichtung, die die erfindungsgemäßen Korrosionsschutzpigmente enthält, einen mit den erfindungsgemäßen Korrosionsschutzpigmenten oder mit der erfindungsgemäßen Korrosionsschutzbeschichtung beschichteten Gegenstand, ein Verfahren zur Herstellung der erfindungsgemäßen plättchenförmigen Korrosionsschutzpigmente sowie die Verwendung der erfindungsgemäßen Korrosionsschutzpigmente.

Mit Korrosion wird allgemein eine chemische oder elektrochemische Reaktion eines metallischen Werkstoffes mit Komponenten aus der Umgebung bezeichnet. Korrosion kann beispielsweise zu einer Oxidation eines Gegenstandes, wie beispielsweise eine Kraftfahrzeugkarosserie, eines Flugzeugrumpfes, einer Brücke, etc. führen. Bei einer Korrosion von Eisen wird auch von Rosten gesprochen. Neben Eisen können auch eine Vielzahl von weiteren Metallen oder Legierungen korrodieren, mithin oxidiert werden, wie beispielsweise Aluminium oder Aluminiumlegierungen.

Auf Grund von Korrosion kommt es an Gebäuden, Fahrzeugen, Schiffen, Flugzeugen etc. zu Schäden, die zu einer Funktionsunfähigkeit dieser Gegenstände führen können.

Wenn beispielsweise verschiedene Metalle mit unterschiedlichem elektrochemischem Potential unter feuchten Bedingungen, beispielsweise in Gegenwart von Salzwasser, in Kontakt kommen, so kann eine galvanische Zelle entstehen. Bei diesem Kontakt kommt es zu einer Oxidation des unedleren Metalls.

Dieser Effekt kann für den Korrosionsschutz genutzt werden, indem ein unedleres Metall als Opferanode auf einem zu schützenden edleren Metall aufgebracht wird.

Bei Einwirkung von Feuchtigkeit wird die Opferanode durch Oxidation aufgelöst und das zu schützende edlere Metall bleibt unversehrt.

So werden beispielsweise zum Schutz von Schiffsschrauben aus Aluminiumbronze, die mit aggressivem Salzwasser in Kontakt kommen, Opferanodenblöcke aus Zink an der Schiffschraube und entlang des Schiffsrumpfs angeordnet.

Aus der WO 2008/125610 A1 ist eine Beschichtungszusammensetzung bekannt, die Zink-Bismut-Legierungspartikel enthält. Der Gehalt an Zink beträgt wenigstens 95 Gew.-%, vorzugsweise wenigstens 98 Gew.-%. Der Gehalt an Wismut liegt in einem Bereich von 0,05 bis 0,7 Gew.-%.

Aus der WO 2010/043708 A1 ist ein Verfahren zum elektrochemischen Korrosionsschutz einer metallischen Oberfläche bekannt, wobei sich die Metallpartikelkonzentration und/oder die Metallpartikelzusammensetzung an der dem gegen Korrosion zu schützenden Werkstück zugewandten Grenzfläche und an der dem Werkstück abgewandten Grenzfläche unterscheidet. Als metallische Partikel können eine Vielzahl von verschiedenen Partikel, wie beispielsweise Zink, Aluminium, Zinn, Magnesium, Nickel, etc., in Form von Plättchen, Lamellen, Körnern oder Staub verwendet werden.

Aus der KR 2010/023855 A ist ein Korrosionsschutzpigment bekannt, das beispielsweise aus einer Zink-Magnesium-Legierung oder einer Aluminium-Magnesium-Legierung besteht. Bei den Pigmenten aus der Zink-Magnesium-Legierung liegt der Zinkanteil in einem Bereich von 90 bis 99,5 M-% und der Magnesiumanteil in einem Bereich von 10 bis 0,5 M-%. Äußerst bevorzugt besteht die Legierung aus 98 M-% Zink und 2 M-% Magnesium.

Aus der DE 10 2009 028 667 A1 ist ein Korrosionsschutzpigment mit einer Kern-Hülle-Struktur bekannt, wobei der Kern aus einem oder mehreren Metallpartikeln besteht. Dieser Kern ist mit einer Hülle versehen, die auf ihrer Außenseite hydrophobe Gruppen besitzt. Die Metallpartikel werden aus der Gruppe, die aus Magnesium, Zink und Aluminium besteht ausgewählt. Alternativ können auch Metalllegierung als Metallpartikel verwendet werden, die einen Hauptbestandteil aufweisen, der entweder Magnesium, Zink oder Aluminium ist. Der Kern mit einem oder mehreren Metallpartikeln ist dabei sphärisch ausgebildet.

Aus der GB 846,904 ist eine binäre Zink-Magnesium-Legierung bekannt, die 10 Gew.-% Magnesium enthält. Diese Zink-Magnesium-Legierung liegt in Form von Barren vor, die zunächst mechanisch gebrochen und sodann in einer Kugelmühle bis zu einer Größe von 10 µm vermahlen wird. Das erhaltene Produkt liegt in Pulverform vor.

Die DE 10 2007 021 602 A1 offenbart nicht näher spezifizierte Zink-Magnesium-Legierungspartikel als Korrosionsschutzpigmente.

Die EP 2 246 396 A1 offenbart die Verwendung von Zink-Nickel-, Zink-Zinn-, Zink-Eisen-, Zink-Aluminium- und Zink-Aluminium-Magnesium-Legierung als Metallpulver zur Verwendung beim Korrosionsschutz.

Die US 2,877,126 offenbart die Verwendung eines Metallpulvers aus einer binären Magnesium-Zink-Legierung für den Korrosionsschutz. Der Anteil von Magnesium liegt dabei in einem Bereich zwischen 15 und 30 Gew.-% und der Anteil von Zink in einem Bereich von 70 bis 85 Gew.-%.

Plättchenförmige Zinkpigmente und Zinklegierungspigmente wie Zinkaluminiumlegierungspigmente und Zinkzinnlegierungspigmente sind kommerziell erhältlich. Sie werden beispielsweise von der Fa. Eckart Suisse hergestellt und vertrieben. Sie werden durch Vermahlen von Zinkgrieß in Kugelmühlen in Testbenzin und üblicherweise Stearinsäure als Schmiermittel hergestellt. Reine ZnMg-Legierungspartikel sind derzeit jedoch nur in der aus der Verdüsung erhältlichen annähernd sphärischen Form verfügbar. Dies wird darauf zurückgeführt, dass diese Partikel sehr spröde sind und bei der Vermahlung und Standardbedingungen eher zerbrechen als verformt werden.

Die US 2004/0191555 A1 offenbart Korrosionsschutzpigmente auf Basis von partikulärem Zink, das mit Aluminium, Zinn, Magnesium, Nickel, Kobalt, Mangan und Mischungen davon legiert sein kann.

Die EP 2 060 345 A1 offenbart Zinklegierungspartikel zur Verwendung in Korrosionsschutzfarben. Die Zinklegierungspartikel können 0,01 bis 30 Gew.-% Magnesium enthalten. Das Aspektverhältnis der Zinklegierungspartikel muss zwischen 1 und 1,5 liegen. Bereits ein Aspektverhältnis von mehr als 2 hat sich als nachteilig herausgestellt.

Das US-Patent 8,114,527 B2 offenbart eine Korrosionsschutzbeschichtung mit Zinklegierungspartikeln, die 0,1 bis 30 Gew.-% Magnesium enthalten können. Die Korrosionsschutzbeschichtung enthält dabei die Zinklegierungspartikel in einer bimodalen Korngrößenverteilung. Die feinteilige Fraktion weist dabei einen Korngrößendurchmesser von 0,05 bis 5 $\mu$m und die grobkörnige Fraktion einen Korngrößendurchmesser von 6 bis 100 $\mu$m auf.

Grundsätzlich ist beim Korrosionsschutz die Verwendung von plättchenförmigen Pigmenten von Vorteil, da plättchenförmige Pigmente im Unterschied zu Pigmenten mit sphärischen oder irregulären Geometrien eine Barrierewirkung nach Aufbringung auf dem gegen Korrosion zu schützenden Gegenstand aufweisen.

Reine Zn-Partikel können zwar in eine Plättchenform ausgeformt werden, jedoch ist das elektrochemische Potential von reinem Zink zu gering, als dass derartige Pigmente als Opferanode für bestimmte Metalle oder Legierungen wie Aluminium und seine Legierungen eingesetzt werden können. Legierungspigmente wie ZnMg$_{26}$ besitzen zwar ein ausreichendes elektrochemisches Potential, sind jedoch sehr spröde und zerbrechen daher äußerst leicht beim Versuch sie mit Standardverfahren zu vermahlen. Beispielsweise wird in der GB 846,904 offenbart, dass durch Vermahlung von Zink-Magnesium-Legierungspartikeln ein Endprodukt in Pulverform erhalten wird. In dieser Pulverform liegen die zerkleinerten Zink-Magnesium-Partikel mit sphärischer und/oder irregulärer Geometrie vor. Korrosionsschutzpigmente wie Chromate haben sich zwar über viele Jahre in Applikationen wie dem Aerospace-Bereich als hocheffizient erwiesen, jedoch scheint ein zukünftiger Einsatz infolge ihrer Toxizität nicht mehr möglich. Demgemäß besteht das Bedürfnis neue Korrosionsschutzpigmente bereitzustellen, welche beispielsweise verbesserte Eigenschaften gegenüber den bekannten ZnMg-Partikeln bieten und/oder als Ersatz für beispielsweise Strontiumchromat in Anwendungsbereichen wie dem Aerospacesektor dienen können.

Aufgabe der vorliegenden Erfindung ist es, einen verbesserten Korrosionsschutz, insbesondere für Aluminium oder Aluminiumlegierungen, bereitzustellen. Insbesondere sollen Korrosionsschutzpigmente bereitgestellt werden, die auf einem gegenüber Korrosion zu schützenden Gegenstand mit einer dünneren Pigmentdicke aufgebracht werden können, wobei die Pigmentdicke deutlich unterhalb von 1 $\mu$m liegen sollte.

Die der vorliegenden Erfindung zu Grunde liegende Aufgabe wird durch Bereitstellung von plättchenförmigen Zinkmagnesiumpigmenten gelöst, wobei die plättchenförmigen Korrosionsschutzpigmente 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

Hierbei ist es bevorzugt, dass die Anteile an Mn, Li, Be, Y oder Sn, insbesondere Mn, weniger als 0,18 mol-%, mehr bevorzugt weniger als 0,15 mol-%, noch mehr bevorzugt weniger als 0,12 mol-% und am meisten bevorzugt weniger als 0,09 mol-% betragen. Insbesondere ist es bevorzugt, dass der Anteil an Mn, Li, Be, Y, Sn und deren Mischungen weniger als 0,18 mol-%, mehr bevorzugt weniger als 0,15 mol-%, noch mehr bevorzugt weniger als 0,12 mol-% beträgt. Ganz besonders bevorzugt sind diese Bestandteile höchstens als Spurenbestandteile enthalten.

Der Anteil der Bestandteile Mn, Li, Be, Y, Sn, Al, Ti, Fe, Cu und deren Mischungen liegt erfindungsgemäß im Bereich von 0 bis 7 mol-%, vorzugsweise im Bereich von 0 bis 6,2 mol-%, mehr bevorzugt im Bereich von 0 bis 5,3 mol-% und noch mehr bevorzugt im Bereich von 0 bis 4,6 mol-%, jeweils bezogen auf die Gesamtmolmenge der Elemente Zn, Mg, Mn, Be, Y, Li, Sn, Al, Ti, Fe und Cu.

Ferner beträgt bei weiteren Ausführungsformen der Anteil an Cu in den erfindungsgemäßen plättchenförmigen Zinkmagnesiumpigmenten vorzugsweise höchstens 1,6 mol-%, mehr bevorzugt höchstens 1,2 mol-%, noch mehr bevorzugt höchstens 0,9 mol-% und noch mehr bevorzugt höchstens 0,4 mol-%, wobei sich die mol-%-Anteile auf die Gesamtmolmenge der Elemente Zn, Mg, Mn, Be, Y, Li, Sn, Al, Ti, Fe und Cu beziehen. Insbesondere kann es bevorzugt sein, dass Kupfer nur als Spurenbestandteil oder gar nicht nachgewiesen werden kann.

Beispiele weiterer enthaltener Bestandteile sind metallische, halbmetallische oder nichtmetallische Verunreinigungen oder beispielsweise in einer oberflächlichen Oxidschicht enthaltener Sauerstoff. Insbesondere kann es bevorzugt sein, dass neben den vorgenannten spezifizierten Bestandteilen höchstens 2 Gew.-%, vorzugsweise höchstens 1,5 Gew.-%, mehr bevorzugt höchstens 1 Gew.-% und noch mehr bevorzugt nur Spurenbestandteile anderer Stoffe neben Sauerstoff nachweisbar sind. Hierbei beziehen sich die Gew.-%-Angaben auf das Zinklegierungspigment. Verständlicherweise sind keine Stoffe umfasst, welche beispielsweise nur auf der Oberfläche der Zinkmagnesiumlegierungspigmente infolge des Austrocknens einer entsprechenden Paste aufgetrocknet wurden.

Die Bestimmung der Legierungsbestandteile kann mittels verschiedener dem Fachmann bekannter Verfahren erfolgen, wobei die genaue Auswahl der entsprechenden Verfahren von den zu bestimmenden Bestandteilen und deren Mengen beeinflusst wird. So werden vom Fachmann beispielsweise verschiedene Verfahren bevorzugt, um die Menge spezifischer Stoffe zu bestimmen, welche als Hauptbestandteil oder Spurenbestandteil vorliegen. Beispiele vom Fachmann typischerweise eingesetzter Messmethoden sind ICP (inductively coupled plasma / induktiv gekoppeltes Plasma) beispielsweise gekoppelt mit MS (mass spectrometry / Massenspektrometrie) oder OES (optical emission spectrometry / optische Emissionsspektroskopie), F-AES (flame atomic emission spectrophotometry / Flammen-Atomemissionsspektrometrie), MPT-AES (microwave plasma torch atomic emission spectrometry / Mikrowellen-Plasmafackel-Atomemissionsspektrometrie), AAS (atomic absorption spectrometry / Atomabsorptionsspektrometrie), etc.. Im Rahmen der Probenvorbereitung werden hierbei auf der Oberfläche anhaftende Stoffe gründlich entfernt. Dem Fachmann ist bewusst, dass geringfügige Schwankungen in den Messergebnissen auftreten können, so dass die Bestimmung mehrerer Proben, beispielsweise etwa 10 Proben, vorzugsweise 10 Proben, erforderlich sein kann.

Zinkmagnesiumpigmente im Sinne der vorliegenden Erfindung sind dadurch gekennzeichnet, dass sie maßgeblich aus einer Zinkmagnesiumlegierung bestehen. Insbesondere stellen die vorgenannten spezifizierten Bestandteile Zn, Mg, Mn, Be, Y, Li, Sn, Al, Ti, Fe und Cu mindestens 93 Gew.-%, vorzugsweise mindestens 95 Gew.%, mehr bevorzugt mindestens 96 Gew.-%, noch mehr bevorzugt mindestens 98 Gew.-% und am meisten bevorzugt mindestens 99 Gew.-% der erfindungsgemäßen Zinkmagnesiumpigmente dar, bezogen auf das Gesamtgewicht der Zinkmagnesiumpigmenten. Beispiele weiterer enthaltener Bestandteile sind metallische, halbmetallische oder nichtmetallische Verunreinigungen oder beispielsweise in einer oberflächlichen Oxidschicht enthaltener Sauerstoff. Insbesondere kann es bevorzugt sein, dass neben den vorgenannten spezifizierten Bestandteilen nur Spurenbestandteile anderer Stoffe neben Sauerstoff nachweisbar sind. Hierbei beziehen sich die Gew.-%-Angaben auf das Zinklegierungspigment. Verständlicherweise sind keine Stoffe umfasst, welche beispielsweise nur auf der Oberfläche der Zinkmagnesiumpigmente infolge des Austrocknens einer entsprechenden Paste aufgetrocknet wurden.

Bevorzugte Ausführungsformen sind in den abhängigen Ansprüchen 2 bis 9 angegeben.

Ebenfalls wird die der vorliegenden Erfindung zu Grunde liegende Aufgabe durch Bereitstellung einer Korrosionsschutzbeschichtung gelöst, die die erfindungsgemäßen Korrosionsschutzpigmente enthält.

Auch wird die Aufgabe der vorliegenden Erfindung durch Bereitstellung eines Gegenstandes gelöst, wobei der Gegenstand die erfindungsgemäßen Korrosionsschutzpigmente oder eine erfindungsgemäße Korrosionsschutzbeschichtung aufweist.

Bevorzugte Weiterbildungen des erfindungsgemäßen Gegenstandes sind in den Ansprüchen 12 und 13 angegeben.

Die Aufgabe der Erfindung wird auch durch Bereitstellung eines Verfahrens zum Herstellen von plättchenförmigen Korrosionsschutzpigmenten nach einem der Ansprüche 1 bis 9 gelöst, wobei das Verfahren folgenden Schritt aufweist:

Mechanisches Verformen von nicht-plättchenförmigen Zinkmagnesiumpartikeln, die 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, wobei ein Energieeintrag von mindestens 2500 kJ pro kg plättchenförmigen Zinkmagnesiumpartikeln bei einer Geschwindigkeit von mindestens 600 kJ pro kg plättchenförmige Zinkmagnesiumpartikel pro Stunde erfolgt. Hierbei beträgt der Anteil an Mn, Li, Be, Y, Sn und Mischungen hiervon vorzugsweise weniger als 0,18 mol-%, mehr bevorzugt weniger als 0,15 mol-%, jeweils bezogen auf die Gesamtmolmenge der Elemente Zn, Mg, Mn, Be, Y, Li, Sn, Al, Ti, Fe und Cu.

Der Energieeintrag kann beispielsweise mittels Messgeräten des betreffenden Aggregats bestimmt werden. Alternativ kann beispielsweise eine Bestimmung des Energieeintrags gemäß Formel (I)

$$E_m(t) = \frac{\int_0^t (P(\tau) - P_0)\,d\tau}{m_P} \qquad \text{Formel (I)}$$

erfolgen. Hierbei steht $E_m(t)$ für den Energieeintrag zum Zeitpunkt t, $P(\tau)$ für die in das betreffende Aggregat eingebrachte Leistung zum Zeitpunkt $\tau$, $P_0$ für die in das Aggregat eingebrachte Leistung in Abwesenheit von nichtsphärischen Metallpartikeln (Leerlaufleistung) und $m_P$ für die Masse der Metallpartikel. Zur Bestimmung der eingebrachten Leistung kann beispielsweise die zum Antrieb eines Elektromotors erforderliche Strommenge bestimmt werden. Insbesondere bevorzugt ist die Verwendung einer Rührwerkskugelmühle.

Die Geschwindigkeit des Energieeintrags beträgt im erfindungsgemäßen Verfahren mindestens 600 kJ/kg·h, vorzugsweise mindestens 680 kJ/kg·h, mehr bevorzugt mindestens 730 kJ/kg·h, noch mehr bevorzugt mindestens 800 kJ/kg·h, und am meisten bevorzugt mindestens 835 kJ/kg·h. Hierbei ist es typischerweise ausreichend einen Durchschnittswert über den gesamten Zeitraum der Vermahlung zu bilden. Bei der Kombination hochenergetischer Vermahlungsabschnitte mit beispielsweise längeren Nachlaufzeiten bei z.B. weniger als 100 kJ/kg·h, insbesondere bei weniger als 10 kJ/kg·h wird die erfindungsgemäße Verformung jedoch primär durch die hochenergetischen Vermahlungsabschnitte bewirkt. Insbesondere ist es daher bevorzugt, dass die 2500 kJ pro kg plättchenförmigen Zinkmagnesiumpartikeln oder die weiter hierin spezifizierten absoluten Energieeinträge in Vermahlungsabschnitten mit mindestens 600 kJ/kg·h, vorzugsweise mindestens 680 kJ/kg·h, mehr bevorzugt mindestens 730 kJ/kg·h, noch mehr bevorzugt mindestens 800 kJ/kg·h, und am meisten bevorzugt mindestens 835 kJ/kg·h eingebracht wurden.

Ferner beträgt der Energieeintrag im erfindungsgemäßen Verfahren mindestens 2500 kJ pro kg plättchenförmigen Zinkmagnesiumpartikeln, vorzugsweise mindestens 3300 kJ pro kg plättchenförmigen Zinkmagnesiumpartikeln, mehr bevorzugt mindestens 3700 kJ pro kg plättchenförmigen Zinkmagnesiumpartikeln, noch mehr bevorzugt mindestens 4250 kJ pro kg plättchenförmigen Zinkmagnesiumpartikeln und am meisten bevorzugt mindestens 4700 kJ pro kg plättchenförmigen Zinkmagnesiumpartikeln.

Die Aufgabe wird ferner durch die Verwendung von Zinkmagnesiumpartikeln nach einem der Ansprüche 1 bis 9 beim Korrosionsschutz eines Gegenstandes, der vorzugsweise aus Aluminium oder einer Aluminiumlegierung besteht oder Aluminium oder eine Aluminiumlegierung aufweist, gelöst.

Die Erfinder haben überraschend festgestellt, dass die Bereitstellung von plättchenförmigen Zinkmagnesiumpigmenten, die 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, Zn, Mg, Mn, Be, Y, Li, Sn, Al, Ti, Fe und Cu mindestens 93 Gew.-% des Zinkmagnesiumpigments darstellen, bezogen auf dessen Gesamtgewicht, und die mittlere Dicke $h_{50}$ der Pigmente kleiner als 1 μm ist, die Bereitstellung eines verbesserten Korrosionsschutzes ermöglichen. Insbesondere ist es hierbei bevorzugt, dass der Anteil an Mn, Li, Be, Y, Sn und Mischungen hiervon weniger als 0,18 mol-%, mehr bevorzugt weniger als 0,15 mol-%, beträgt.

Bislang konnten binäre Zink-Magnesium-Legierungen in kleinteiliger Form nur in Form von Pulvern, wobei die Pulverpartikel sphärische oder irregulär geformte Geometrien aufweisen, bereitgestellt werden. Wie in der GB 846,904 offenbart, wird durch Vermahlung von Zink-Magnesium-Legierungspartikeln ein Endprodukt in Pulverform erhalten. In dieser Pulverform liegen die zerkleinerten Zink-Magnesium-Partikel mit sphärischer und/oder irregulärer Geometrie vor. Grund hierfür ist, dass Zink-Magnesium-Legierungen wenig duktil, sondern vielmehr spröde sind. Die Sprödigkeit der Zink-Magnesium-Legierungen führt dazu, dass die Legierung nur schlecht plastisch verformbar ist und die Legierungen unter Einsatz von Standardbedingungen zu kleineren Partikeln zerbrechen, bevor eine plastische Verformung eintritt.

Überraschenderweise haben die Erfinder gefunden, dass durch einen schnellen und hohen Energieeintrag eine weitgehende plastische Verformung erzielt werden kann, so dass auch mit einer derart spröden Legierung plättchenförmige Zinkmagnesiumpigmente erhalten werden können. Als besonders vorteilhaft hat sich hierbei die Verwendung einer Rührwerkskugelmühle erwiesen.

Die Bereitstellung von plättchenförmigen Zinkmagnesiumpigmenten auf Basis der erfindungsgemäß verwendeten Zink-Magnesium-Legierung mit einem Anteil von 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, ermöglicht die Bereitstellung eines verbesserten Korrosionsschutzes. Hierbei beträgt wobei der Anteil an Mn, Li, Be, Y, Sn und Mischungen hiervon vorzugsweise weniger als 0,18 mol-%, mehr bevorzugt weniger als 0,15 mol-%, jeweils bezogen auf die Gesamtmolmenge der Elemente Zn, Mg, Mn, Be, Y, Li, Sn, Al, Ti, Fe und Cu.

Zink weist bei Standardbedingungen (25°C, 1013,25 mbar, pH 0) ein elektrochemisches Standardpotential von -0,76 V auf. Magnesium weist unter Standardbedingungen ein elektrochemisches Standardpotential von -2,362 V auf. Mithin weist Magnesium ein negativeres elektrochemisches Standardpotential als Zink auf. Bei einem Anteil von 32,3 bis 59,2 mol-% Magnesium in der erfindungsgemäß zu verwendenden Zink-Magnesium-Legierung wird das elektrochemische Standardpotential der plättchenförmigen Zinkmagnesiumpigmente unter das von reinem Zink abgesenkt. Äußerst vorteilhaft wird die chemische Reaktivität der Zink-Magnesium-Legierung durch den Anteil an Magnesium nicht zu stark erhöht. Eine zu große Reaktivität von Zinkmagnesiumpigmenten führt zu einem raschen Verbrauch der Zinkmagnesiumpigmente und in Folge dessen zu einem zeitlich stärker beschränkten Korrosionsschutz.

Es hat sich herausgestellt, dass mit einem Anteil von 32,3 bis 59,2 mol-% Magnesium in der erfindungsgemäß zu verwendenden Zink-Magnesium-Legierung zum einen ein verbesserter Korrosionsschutz auf Grund des Anteils an Magnesium erhalten wird und zum anderen ein ausreichend langlebiger Korrosionsschutz bereitgestellt werden kann.

Bei den in den erfindungsgemäßen Zinkmagnesiumlegierungen enthaltenen Stoffen neben Zn, Mg, Mn, Be, Y, Li, Sn, Al, Ti, Fe und Cu kann es sich um Nichtmetalle, Halbmetalle und Nichtmetalle handeln. Beispiele der vorgenannten Halbmetalle sind B, Ge und Si. Beispiele der Metalle sind Blei, Calcium, Strontium, Barium, Natrium, Kalium, Wismut, Indium, Cer, Tellur, Silber, Quecksilber, Eisen, Kobalt, Nickel, Chrom, Niob, Vanadium, Molybdän, Tantal, Osmium, Wolfram, Zirkonium, Gold, Platin, Cadmium, Lanthan, Gallium. Beispiele entsprechender Nichtmetalle sind Kohlenstoff, Stickstoff und Sauerstoff. Diese Stoffe können beispielsweise als Verunreinigungen in den eingesetzten Metallen enthalten gewesen sein. Nichtmetalle wir Sauerstoff können beispielsweise in Form einer Oxidschicht auf der Oberfläche gebunden werden.

Besonders gute antikorrosive Eigenschaften scheinen für Zink-Magnesiumlegierungspigmente erzielt zu werden, welche sich durch ein bestimmtes Verhältnis von Zink zu Magnesium auszeichnen. Hierbei wird vermutet, dass dies auf eine Ausbildung spezifischer intermetallischer Phasen und/oder einer spezifischen Entmischung zurückgeführt werden kann. Bei bestimmten Ausführungsformen ist es bevorzugt, dass das molare Verhältnis von Zink zu Magnesium in einem Bereich von vorzugsweise 0,75 zu 1 bis 1,35 zu 1, vorzugsweise in einem Bereich von 0,85 zu 1 bis 1,25 zu 1, mehr bevorzugt in einem Bereich von 0,9 zu 1 bis 1,2 bis 1, noch mehr bevorzugt in einem Bereich von 0,93 zu 1 bis 1,15 zu 1, liegt.

Gemäß weiteren bevorzugten Ausführungsformen der Erfindung enthalten die vorgenannten plättchenförmigen Zinkmagnesiumlegierungspigmente höchstens 3 mol-%, vorzugsweise höchstens 2,3 mol-%, mehr bevorzugt höchstens 1,8 mol-% Al, Ti, Fe, Cu oder Mischungen hiervon, wobei sich die mol-%-Anteile auf die Gesamtmolmenge der Elemente Zn, Mg, Mn, Be, Y, Li, Sn, Al, Ti, Fe und Cu beziehen. Insbesondere ist es bevorzugt, dass sich die vorgenannten mol-% Angaben auf die Gesamtmenge der Elemente Be, Y, Li, Sn, Al, Ti, Fe und Cu beziehen. Insbesondere ist es hierbei bevorzugt, dass Ti, Fe und Cu jeweils in einer Menge von höchstens 1,2 mol-% und Al in einer Menge von höchstens 1,5 mol-%, vorzugsweise Ti, Fe und Cu jeweils in einer Menge von höchstens 0,9 mol-% und Al in einer Menge von höchstens 1,3 mol-%, mehr bevorzugt Ti, Fe und Cu jeweils in einer Menge von höchstens 0,6 mol-% und Al in einer Menge von höchstens 0,9 mol-% vorliegt.

Im Besonderen ist es bevorzugt, das die plättchenförmigen Zinkmagnesiumlegierungspigmente Aluminium in einer Menge von weniger als 1,3 mol-%, vorzugsweise von weniger als 0,9 mol-%, noch weiter bevorzugt von weniger als 0,6 mol-%, bezogen auf die Gesamtmolmenge der Elemente Zn, Mg, Mn, Be, Y, Li, Sn, Al, Ti, Fe und Cu. Insbesondere ist es bevorzugt, wenn Aluminium nur als Spurenbestandteil enthalten ist oder die Menge an Aluminium unter der Nachweisgrenze liegt.

Gemäß einer weiteren bevorzugten Ausführungsform der Erfindung enthalten die plättchenförmigen Zinkmagnesiumpigmente 45,6 bis 57,8 mol-% Zink sowie 42,2 bis 54,4 mol-% Magnesium, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, wobei Zn, Mg, Mn, Be, Y, Li, Sn, Al, Ti, Fe und Cu mindestens 95 Gew.-% der Zinkmagnesiumpigmente darstellen, bezogen auf deren Gesamtgewicht.

Weiter bevorzugt sind plättchenförmige Zinkmagnesiumpigmente, die 46,7 bis 56,8 mol-% Zink, 43,2 bis 53,3 mol-% Magnesium und 0 bis 4,6 mol-% Mn, Li, Be, Y, Sn, Al, Ti, Fe, Cu und Mischungen hiervon, weiter bevorzugt 47,4 bis 54,3 mol-% Zink, 45,7 bis 52,6 mol-% Magnesium und 0 bis 3,4 mol-% Mn, Li, Be, Y, Sn, Al, Ti, Fe, Cu und Mischungen hiervon, enthalten, wobei der Anteil an Mn, Li, Be, Y, Sn und Mischungen hiervon weniger als 0,18 mol-% ist, jeweils bezogen auf die Gesamtmolmenge der Elemente Zn, Mg, Mn, Be, Y, Li, Sn, Al, Ti, Fe und Cu, wobei Zn, Mg, Mn, Be, Y, Li, Sn, Al, Ti, Fe und Cu insgesamt mindestens 93 Gew.-% der Zinkmagnesiumpigmente darstellen, bezogen auf deren Gesamtgewicht.

Als sehr geeignet hat sich eine Zink-Magnesium-Legierung mit einem Anteil von 50,5 bis 51,5 mol-% Zink, 48,5 bis 49,5 mol-% Magnesium, 0 bis 1 mol-% Mn, Li, Be, Y, Sn, Al, Ti, Fe, Cu und Mischungen hiervon, wobei der Anteil an Mn, Li, Be, Y, Sn und Mischungen hiervon vorzugsweise weniger als 0,15 mol-% ist, und wobei Zn, Mg, Mn, Be, Y, Li, Sn, Al, Ti, Fe und Cu mindestens 97 Gew.-% der Zinkmagnesiumpigmente darstellen, bezogen auf deren Gesamtgewicht, erwiesen. Insbesondere bevorzugt stellen wobei Zn, Mg, Mn, Be, Y, Li, Sn, Al, Ti, Fe und Cu mindestens 98 Gew.-% und weitere Bestandteile außer Sauerstoff höchstens 1,5 Gew.-% der Zinkmagnesiumpigmente dar.

Überraschenderweise ist mithin die Bereitstellung von plättchenförmigen Zinkmagnesiumpigmenten möglich, die eine mittlere Dicke deutlich unterhalb von 1 μm, vorzugsweise von weniger als 700 nm aufweisen. Schon die Bereitstellung von plättchenförmigen Zinkmagnesiumpigmenten mit einem Gehalt von 40,8 bis 67,8 mol-% Zink, 32,3 bis 59,2 mol-% Magnesium, und 0 bis 7 mol-% Mn, Li, Be, Y, Sn, Al, Ti, Fe, Cu und Mischungen hiervon enthalten, wobei der Anteil an Mn, Li, Be, Y, Sn und Mischungen hiervon beispielsweise weniger als 0,15 mol-% ist, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-%, ist im Hinblick auf die geringe Duktilität bzw. hohe Sprödigkeit dieser Legierung überraschend. Völlig unerwartet war jedoch, dass es erfindungsgemäß möglich ist, nicht nur plättchenförmige Zinkmagnesiumpigmente, sondern plättchenförmige Zinkmagnesiumpigmente mit äußerst geringen Dicken bereitzustellen.

Ferner zeigte sich, dass es mittels erfindungsgemäßer Verwendung eines schnellen und hohen Energieeintrags möglich ist, eine gleichmäßige Vermahlung unter deutlich vermindertem Bruch der größeren Partikel zu erzielen. Dies kann insbesondere durch den Einsatz einer Rührwerkskugelmühle erreicht werden. Hingegen scheinen in einer normalen Kugelmühle durch den hierbei gewöhnlicherweise standardmäßig bedeutend niedrigeren und langsameren Energieeintrag größere Partikel überdurchschnittlich stark zertrümmert zu werden, so dass der $D_{90}$-Wert beim Versuch der Herstellung plättchenförmiger Zinkmagnesiumpigmente mit einer mittleren Dicke von weniger als 1 μm unverhältnismäßig stark absinkt. Insbesondere bei der Herstellung plättchenförmiger Zinkmagnesiumpigmente mit einer mittleren Dicke unterhalb von 500 nm sinkt der Anteil der großen Partikel unverhältnismäßig stark ab, so dass der Span Δd gemäß Formel (I) Span $\Delta D = (D_{90}-D_{10})/D_{50}$ sehr klein ist. Dies setzt sich bei der weiteren Vermahlung fort. Mittels der erfindungsgemäßen Vermahlung unter Verwendung eines schnellen und hohen Energieeintrages, beispielsweise unter Einsatz einer Rührwerkskugelmühle, konnten hingegen überraschenderweise auch mittlere Dicken unter 500 nm erzielt werden, während große Partikel erhalten bleiben, was wiederum in einen höheren $D_{90}$ resultiert. Ein derartiger Anteil größerer Partikel scheint sich wiederum beispielsweise für die Kontaktierung der einzelnen Partikel oder die Ausbildung einer durchgängigen Barriereschicht als vorteilhaft zu erweisen, wodurch der kathodische Oxidationsschutz der betreffenden Zusammensetzungen verstärkt wird.

Der Begriff Rührwerkskugelmühle im Sinne der vorliegenden Erfindung wird verstanden, dass die Mühle in ihrem Inneren einen Rotor aufweist, der die Mahlkörper, vorzugsweise Kugeln, in Bewegung versetzt oder zu deren Bewegung beiträgt. Eine Spezialform der Rührwerkskugelmühle weist einen Rotor in ihrem Inneren auf, während gleichzeitig die Außenwandung rotiert.

Die erfindungsgemäßen Zinkmagnesiumpigmente sind dadurch gekennzeichnet, dass deren mittlere Dicke weniger als 1 μm, vorzugsweise weniger als 700 nm, mehr bevorzugt weniger als 550 nm, mehr bevorzugt weniger als 400 nm und noch mehr bevorzugt weniger als 350 nm beträgt.

Ferner ist es erfindungsgemäß bevorzugt, plättchenförmige Zinkmagnesiumpigmente bereitzustellen, die eine mittlere Dicke aus einem Bereich von 90 nm bis unter 1000 nm aufweisen. Gemäß einer weiteren bevorzugten Ausführungsform liegt die mittlere Dicke der Zinkmagnesiumpigmente in einem Bereich von 100 nm bis unter 700 nm, noch weiter bevorzugt von 110 nm bis unter 550 nm. Als sehr geeignet hat sich auch eine Dicke aus einem Bereich von 120 nm bis unter 400 nm erwiesen. Äußerst bevorzugt liegt die mittlere Dicke in einem Bereich von 125 nm bis unter 350 nm.

Die mittlere Dicke der Zinkmagnesiumpigmente kann aus einer über Dickenauszählung mit Rasterelektronenmikroskopie (REM) ermittelten Dickenverteilung in der Darstellung als Summenhäufigkeitsverteilung bestimm werden. Bei dieser Methode werden mittels Rasterelektronenmikroskopie (REM) so viele Teilchen vermessen, dass eine repräsentative statistische Auswertung vorgenommen werden kann. Üblicherweise werden etwa 100 Teilchen, vorzugsweise 100 Teilchen, vermessen.

Die Dickenverteilung wird dabei zweckmäßigerweise in Form einer Summenhäufigkeitsverteilungskurve dargestellt. Als Mittelwert bietet sich der $h_{50}$-Wert der Summenhäufigkeitsverteilung an. Ein Maß für den Anteil der dickeren Pigmente ist der $h_{90}$-Wert. Er besagt, dass 90% aller Pigmentteilchen eine Dicke gleich diesem Wert und/oder unterhalb dieses Wertes besitzen. In analoger Weise ist der $h_{10}$-Wert ein Maß für den Anteil der dünneren Pigmente in der Dickenverteilung, der besagt, dass 10% aller Pigmentteilchen eine Dicke gleich diesem Wert und/oder unterhalb dieses Wertes besitzen. Der $h_{50}$-Wert gibt folglich den Wert der mittleren Dicke an, d.h., dass 50% aller Pigmentteilchen eine Dicke gleich diesem Wert und/oder unterhalb dieses Wertes besitzen

Die Messung Dicke der einzelnen Pigmente mittels REM sowie die Berechnung der mittleren Dicke erfolgt nach der in der DE 10 315 775 A1 beschriebenen Methode.

Kurz zusammengefasst kann die Dicke der Zinkmagnesiumpigmente mittels REM wie folgt ermittelt werden:

Die erfindungsgemäßen plättchenförmigen Zinkmagnesiumpigmente werden zunächst mit Aceton gewaschen und dann ausgetrocknet.

Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und die Zinkmagnesiumpigmente werden auf das erweichte Harz gestreut. Das Harz wird durch die Abkühlung wieder fest und die aufgestreuten Zinkmagnesiumpigmente können - bedingt durch das Wechselspiel zwischen Adhäsion und Schwerkraft - nahezu senkrecht stehend und fixiert auf dem Probenteller präpariert werden. Dadurch sind die Pigmente im Elektronenmikroskop seitlich gut zu vermessen. Bei der Vermessung der Dicke wird der azimuthale Winkel α des Pigmentes zu einer zur Oberfläche normalen Ebene geschätzt und bei der Dickenauswertung nach der Formel

$$h_{eff} = h_{mess}/\cos\alpha$$

berücksichtigt. Von den $h_{eff}$-Werten wird anhand der relativen Häufigkeiten die Summenverteilungskurve erstellt. Es werden ca. 100 Pigmente, vorzugsweise 100 Pigmente, gezählt.

Alternativ können die Dicken der Pigmente auch anhand von Querschliffen von lackierten Proben gezählt werden. Diese Methode sollte jedoch nur bei einer sehr guten planparallelen Orientierung der Pigmente angewandt werden. Andernfalls können die Pigmente im Querschliff mit einem azimuthalen Neigungswinkel, der jedoch für den Beobachter nicht erkennbar ist, orientiert sein. Dies führt systematisch zu der Messung von höheren Dicken.

Die Bereitstellung von plättchenförmigen Zinkmagnesiumpigmenten mit den vorstehend angegebenen geringen mittleren Dicken erlaubt die Bereitstellung einer Korrosionsschutzbeschichtung, bei der die Gesamtdicke auf Grund der erfindungsgemäßen plättchenförmigen Zinkmagnesiumpigmente mit den angegebenen mittleren Dicken signifikant verringert werden kann. Dies ermöglicht die Verwendung der erfindungsgemäßen Pigmente insbesondere in Anwendungen des Korrosionsschutzes mit sehr dünnen Beschichtungen wie beispielsweise Flugzeugbeschichtungen oder Coil-Coating.

Auf Grund der geringen Dicke der erfindungsgemäßen plättchenförmigen Zinkmagnesiumpigmente ist das Deckvermögen der erfindungsgemäßen plättchenförmigen Zinkmagnesiumpigmente, d.h. die Abdeckung der Fläche pro Gewichtseinheit Pigment, sehr hoch. Bei gleicher Gewichtseinheit, beispielsweise 1 Gramm Pigment, weisen dünnere plättchenförmige Zinkmagnesiumpigmente ein höheres Deckvermögen auf als plättchenförmige Zinkmagnesiumpigmente mit einer größeren Dicke, da die Anzahl an plättchenförmigen Pigmenten pro Gewichtseinheit bei dünneren plättchenförmigen Zinkmagnesiumpigmenten höher ist als bei dickeren plättchenförmigen Zinkmagnesiumpigmenten. Die dünneren plättchenförmigen Zinkmagnesiumpigmente können sich bei dem vor Korrosion zu schützenden Gegenstand, beispielsweise einen Flugzeugrumpf oder eine Fahrzeugkarosserie, nebeneinander und übereinander so anordnen, dass zum einen ein äußerst effektiver Barrierenschutz aufgebaut wird und zum anderen der vor Korrosion zu schützende Gegenstand zuverlässig von den plättchenförmigen Zinkmagnesiumpigmenten mit geringer Dicke abgedeckt werden.

Gemäß einer weiteren bevorzugten Ausführungsform der Erfindung weisen die plättchenförmigen Zinkmagnesiumpigmente einen mittleren Durchmesser $D_{50}$ aus einem Bereich von 4 bis 35 $\mu$m, weiter bevorzugt von 4,5 bis 30 $\mu$m, noch weiter bevorzugt von 5 bis 25 $\mu$m auf. Als sehr geeignet hat sich auch ein mittlerer Durchmesser von 5 bis 18 $\mu$m erwiesen.

Gemäß einer weiteren bevorzugten Ausführungsform weisen die plättchenförmigen Zinkmagnesiumpigmente eine Größenverteilung mit einem Span $\Delta$d gemäß der Formel (II) Span $\Delta D = (D_{90}-D_{10})/D_{50}$ von 1 bis 2,3 auf. Weiter bevorzugt beträgt der Span 1,2 bis 1,9, noch weiter bevorzugt 1,3 bis 1,5.

Der Span $\Delta D$ stellt eine Charakterisierung der Breite der Teilchengrößenverteilung dar. Je kleiner der Span ist, desto enger ist die Teilchengrößenverteilung.

Der $D_{10}$-, $D_{50}$-, bzw. $D_{90}$-Wert der Summenhäufigkeitsverteilung der erfindungsgemäßen Zinkmagnesiumpigmente, wie sie durch Laserbeugungsmethoden erhalten wird, gibt an, dass 10%, 50% bzw. 90% der Zinkmagnesiumpigmente einen Durchmesser aufweisen, der gleich oder kleiner als der jeweils angegebene Wert ist. Die Größenverteilungskurve kann mit einem Gerät der Firma Malvern (Gerät: Malvern Mastersizer 2000) gemäß Herstellerangaben bestimmt werden. Die Auswertung der Streulichtsignale erfolgt dabei nach der Mie-Theorie.

Gemäß einer bevorzugten Weiterbildung der Erfindung liegt der $D_{10}$-Wert in einem Bereich von 0,9 $\mu$m bis 6 $\mu$m, vorzugsweise von 1,0 bis 3,3 $\mu$m, weiter bevorzugt von 1,5 $\mu$m bis 5,8 $\mu$m, noch weiter bevorzugt von 1,8 $\mu$m bis 4,5 $\mu$m, liegt.

Weiterhin ist bevorzugt, dass der $D_{50}$-Wert in einem Bereich von 3 $\mu$m bis 25 $\mu$m, weiter bevorzugt von 4,0 $\mu$m bis 20 $\mu$m, noch weiter bevorzugt von 4,5 $\mu$m bis 14 $\mu$m, liegt.

Weiterhin ist bevorzugt, dass der $D_{90}$-Wert in einem Bereich von 5 $\mu$m bis 56,7 weiter bevorzugt von 6 $\mu$m bis 46,8 $\mu$m, noch weiter bevorzugt von 7 bis 39,5 $\mu$m, liegt.

Gemäß einer weiteren bevorzugten Ausführungsform der Erfindung weisen die plättchenförmigen Zinkmagnesiumpigmente nur solche Kombination von $D_{10}$-, $D_{50}$-und $D_{90}$-Werten auf, so dass der Span $\Delta D$ in den vorstehend angegebenen Bereichen liegt.

Der $D_{10}$-Wert ist ein Maß für den Feinanteil in einer Partikelgrößenverteilung. Je größer der $D_{10}$-Wert ist, desto geringer ist der Feinanteil. Partikel mit einer Größe bzw. einem Durchmesser von weniger als 1 $\mu$m können nicht mehr in Plättchenform vorliegen, sondern liegen in sphärischer oder irregulärer Form vor.

Die erfindungsgemäßen plättchenförmigen Zinkmagnesiumpigmente weisen ungeachtet der Sprödigkeit der erfindungsgemäß zu verwendenden Zink-Magnesium-Legierung einen äußerst geringen Anteil an nicht-plättchenförmigen Partikeln, beispielsweise in Form von Abrieb oder irregulär geformten Bruchstücken auf.

Auf Grund des äußerst geringen Anteils an sphärisch und/oder irregulär geformten Partikeln bei den plättchenförmigen Zinkmagnesiumpigmenten kommt es aufgrund der Plättchenform der Zinkmagnesiumpigmente zum einen zu einer Verbesserung der Barrierewirkung und zum anderen zu einer verbesserten Opferanodenwirkung.

Vorzugsweise liegt das Aspektverhältnis, d.h. das Verhältnis von mittlerem Pigmentdurchmesser ($D_{50}$) zu mittlerer Pigmentdicke ($h_{50}$) bei mindestens 6. Insbesondere ist es bevorzugt, dass das Aspektverhältnis in einem Bereich von 10 bis 200, weiter bevorzugt von 12 bis 100, weiter bevorzugt von 15 bis 75, noch weiter bevorzugt von 18 bis 50, noch weiter bevorzugt von 20 bis 40, liegt.

Besonders bevorzugte plättchenförmige Zinkmagnesiumpigmente weisen eine mittlere Dicke von weniger als 700 nm, sowie eine Zusammensetzung von 48,9 bis 54,1 mol-% Zink, 45,9 bis 51,1 mol-% Magnesium und 0 bis 2,7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu auf, wobei sich die mol-%-Anteile zu 100 mol-% aufsummieren, wobei Zn, Mg, Mn, Be, Y, Li, Sn, Al, Ti, Fe und Cu mindestens 95 Gew.-% der Zinkmagnesiumpigmente darstellen, bezogen auf deren Gesamtgewicht. Ganz besonders bevorzugte plättchenförmige Zinkmagnesiumpigmente weisen eine mittlere Dicke von 100 bis 700 nm, sowie eine Zusammensetzung von 50,1 bis 52,7 mol-% Zink, 47,3 bis 49,9 mol-% Magnesium und 0 bis 2,3 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu auf, wobei sich die mol-%-Anteile zu 100 mol-% aufsummieren, wobei Zn, Mg, Mn, Be, Y, Li, Sn, Al, Ti, Fe und Cu mindestens 95 Gew.-% der Zinkmagnesiumpigmente darstellen, bezogen auf deren Gesamtgewicht. Insbesondere ist es hierbei bevorzugt, dass der Anteil an Mn, Li, Be, Y, Sn und Mischungen hiervon bei den vorgenannten Ausführungsformen geringer als 0,15 mol-% ist, bezogen auf die Gesamtmolmenge der Elemente Zn, Mg, Mn, Be, Y, Li, Sn, Al, Ti, Fe und Cu.

Die Herstellung der Legierung erfolgt durch Schmelzen der Komponenten Zink, Magnesium und gegebenenfalls weiteren Bestandteilen in die Form einer homogenen Schmelze unter Inertgas, vorzugsweise Argon. Die Schmelze wird sodann auf herkömmliche Art und Weise unter Inertgas, vorzugsweise unter Argon, unter Erhalt eines Zink-Magnesium-Legierungspulvers verdüst. Das Pulver liegt vorzugsweise in sphärischer Form vor. In dem erhaltenen Legierungspulver können sich Einschlüsse aus elementarem Metall oder intermetallischen Phasen ausbilden. Aus dem so erhaltenen Zink-Magnesium-Pulver können unter Verwendung des erfindungsgemäßen Verfahrens die plättchenförmigen Zinkmagnesiumpigmente hergestellt werden.

Gemäß einer weiteren bevorzugten Ausführungsform sind die plättchenförmigen Zinkmagnesiumpigmente durch mechanische Verformung unter Verwendung einer Rührwerkskugelmühle erhalten.

Grundsätzlich ist es möglich, plättchenförmige Zinkmagnesiumpigmente über physikalische Dampfabscheidung herzustellen. Das definierte Verdampfen von Zinkmetall und Magnesiummetall unter Erhalt einer spezifizierten Zink-Magnesium-Legierung ist technisch aufwendig und mit sehr hohen Kosten verbunden. Bei Zinkmagnesiumpigmenten handelt es sich jedoch um ein in großen Mengen verwendetes Gut, das preisgünstig herstellbar sein muss.

Insoweit ist die Herstellung der plättchenförmigen Zinkmagnesiumpigmente über physikalische Dampfabscheidung ein möglicher Weg, der jedoch im Hinblick auf seine Kosten kein marktfähiges Produkt ermöglicht.

Mithin ist es bevorzugt, die erfindungsgemäßen plättchenförmigen Zinkmagnesiumpigmente durch mechanische Verformung insbesondere unter Verwendung einer Rührwerkskugelmühle herzustellen. Die durch mechanische Verformung unter Verwendung einer Rührwerkskugelmühle hergestellten plättchenförmigen Zinkmagnesiumpigmente unterscheiden sich strukturell von den durch physikalische Dampfabscheidung hergestellten plättchenförmigen Zinkmagnesiumpigmenten durch die Oberflächenbeschaffenheit. Über physikalische Dampfabscheidung werden Pigmente mit absolut planer Oberfläche erhalten. Des Weiteren weisen die über physikalische Dampfabscheidung hergestellten metallischen Pigmente nach Ablösung von Trägermaterial gerade Bruchkanten auf.

Die durch mechanische Verformung unter Verwendung einer Rührwerkskugelmühle hergestellten erfindungsgemäßen plättchenförmigen Zinkmagnesiumpigmente zeichnen sich zum einen durch eine nicht absolut plane Oberfläche, sondern vielmehr durch eine leicht wellige Oberfläche aus. Ferner weisen die durch mechanische Verformung hergestellten plättchenförmigen Zinkmagnesiumpigmente abgerundete und mit leichten Einrissen versehene Randbereiche auf. Strukturell lassen sich mithin durch physikalische Dampfabscheidung hergestellte plättchenförmige Zinkmagnesiumpigmente von durch mechanische Verformung erhaltene plättchenförmige Zinkmagnesiumpigmente beispielsweise mittels Rasterelektronenmikroskopie (REM) leicht unterscheiden.

Über das erfindungsgemäße Verfahren lassen sich plättchenförmige Zinkmagnesiumpigmente durch mechanische Verformung kostengünstig herstellen. Beim Korrosionsschutz kommt es weniger auf die optischen Eigenschaften der Pigmente an. Vielmehr ist für einen effektiven Korrosionsschutz die plättchenförmige Struktur der Pigmente wesentlich. Dass die durch mechanische Verformung hergestellten plättchenförmigen Zinkmagnesiumpigmente eine deutlich ungleichmäßigere Oberfläche aufweisen, ist für einen wirksamen Korrosionsschutz nicht nachteilig.

Gegenstand der vorliegenden Erfindung ist ferner eine Korrosionsschutzbeschichtung, die die erfindungsgemäßen plättchenförmigen Zinkmagnesiumpigmente enthält.

Die erfindungsgemäßen Zinkmagnesiumpigmente können in die unterschiedlichsten Beschichtungszusammensetzungen, wie beispielsweise Farben und Lacke, eingearbeitet werden.

Der Anteil der Zinkmagnesiumpigmente kann gemäß dem jeweiligen Anforderungsprofil in der Korrosionsschutzbeschichtung eingestellt werden.

Üblicherweise liegt der Anteil der Zinkmagnesiumpigmente in der Korrosionsschutzbeschichtung vorzugsweise in einem Bereich von 10 bis 80 Gew.-%, weiter bevorzugt von 15 bis 70 Gew.-%, noch weiter bevorzugt von 20 Gew.-% bis 65 Gew-%, bezogen auf das Gesamtgewicht der Korrosionsschutzbeschichtung.

Der Anteil an Bindemittel in der Korrosionsschutzbeschichtung liegt dabei vorzugsweise in einem Bereich 15 bis 85 Gew.-%, weiter bevorzugt von 25 bis 75 Gew.-%, noch weiter bevorzugt von 35 bis 70 Gew-%, bezogen auf das Gesamtgewicht der Korrosionsschutzbeschichtung.

Der Anteil an Lösungsmittel liegt im Falle eines Lackes oder einer Farbe in der Korrosionsschutzbeschichtung vorzugsweise in einem Bereich von 1 bis 10 Gew.-%, weiter bevorzugt von 2 bis 8 Gew.-%, noch weiter bevorzugt von 2 Gew.-% bis 5 Gew.-%. In dem organischen Lösungsmittel kann auch Wasser enthalten sein. Vorzugsweise liegt der Wasseranteil, bezogen auf das Gesamtgewicht des Lösungsmittels, bei weniger als 1 Gew.-%, weiter bevorzugt bei weniger als 0,9 Gew.-%, noch weiter bevorzugt bei als 0,8 Gew.-%.

Bei der vorstehend angegebenen Zusammensetzung der Korrosionsschutzbeschichtung handelt es sich um die aufzubringende Zusammensetzung, mithin nicht um die getrocknete Zusammensetzung.

Als Lösungsmittel können die üblicherweise in Farben und Lacken verwendeten organischen Lösungsmittel, beispielsweise Ethoxypropylacetat, Methylethylketon, Methylisobutylketon, Ethylacetat, Butylacetat, Xylol, Aceton und Mischungen davon, verwendet werden.

Die erfindungsgemäße Korrosionsbeschichtung kann als Einkomponentensystem (1 K) oder als Zweikomponentensystem (2K) ausgebildet sein.

Die Korrosionsschutzbeschichtung kann ferner als anodischer oder kathodischer Tauchlack ausgebildet sein.

Bei einer weiteren erfindungsgemäßen Weiterbildung ist die erfindungsgemäße Korrosionsschutzbeschichtung als Pulverlack ausgebildet.

Die erfindungsgemäßen plättchenförmigen Zinkmagnesiumpigmente sind in der Anwendung äußerst vielfältig und können mithin in die unterschiedlichsten Beschichtungszusammensetzungen eingearbeitet werden.

Als Bindemittel können in Verbindung mit den erfindungsgemäßen plättchenförmigen Zinkmagnesiumpigmenten alle üblichen Farb- und Lackbindemittel verwendet werden. Die jeweils verwendeten Bindemittel werden in Abhängigkeit vom Lösemittel und/oder dem jeweiligen Beschichtungsverfahren ausgewählt.

Bei Pulverbeschichtungen werden vorzugsweise thermoplastische oder duroplastische Harze als Bindemittel verwendet.

Beispielsweise können als thermoplastische Bindemittel Polyvinylchlorid, Polyamide, Polyethylene, Polypropylene, Polyvinylidenfluoride und anderen thermoplastische Harze verwendet werden.

Als duroplastische oder wärmehärtbare Bindemittel können beispielsweise Epoxidharze, Polyurethanharze, Polyesterharze, Acrylatharze, etc. verwendet werden.

Als sehr geeignet haben sich Epoxidharze und Polyurethanharze, beispielsweise zur Verwendung in Pulverlacken, erwiesen. Ferner werden Epoxidharze einerseits und Polyurethanharze andererseits insbesondere als Bindemittelsysteme für die Außenlackierung von Flugzeugen verwendet. So können beispielsweise die von der Firma Sherwin-Williams, USA, vertriebene Bindemittelsysteme oder von der Firma Dupont, USA, vertriebene Bindemittelsysteme verwendet werden.

Die erfindungsgemäßen Korrosionsschutzbeschichtungen können die üblichen Additive enthalten, wie beispielsweise Netz- oder Dispergiermittel, Oberflächenadditive, Mattierungsmittel, Rheologieadditive, Lichtschutzmittel, beispielsweise UV-Stabilisatoren, Trockenstoffe, Biozide oder Mischungen davon.

Die erfindungsgemäßen plättchenförmigen Zinkmagnesiumpigmente sind im Prinzip auf allen üblichen Substraten als Korrosionsschutzlackierung aufzubringen. Bevorzugt werden sie jedoch auf spezielle Substrate insbesondere umfassend unedlere Metalle wie Aluminiumlegierungen aufgebracht. Beispiele entsprechender Aluminiumlegierungen sind AA2024, AA5754. Da das Standardpotential von Aluminium niedriger ist als jenes von Zink, können Zinkplättchen (oder Zinkstaub) hier nicht verwendet werden.

Die erfindungsgemäßen plättchenförmigen Zinkmagnesiumpigmente eignen sich gemäß einer bevorzugten Ausführungsform der Erfindung zur Verwendung bei der Bandbeschichtung, auch Coil coating genannt, von beispielsweise Aluminium-, Aluminiumlegierungs- oder Stahlbändern oder Aluminium-, Aluminiumlegierungs- oder Stahlblechen.

Die mittels Bandbeschichtung beschichteten Bleche finden vielfältige Anwendung, beispielsweise bei Fassaden, Dachabdeckungen oder Haushaltsgeräte, wie beispielsweise Kühlschränke, Waschmaschinen, Spülmaschinen, etc..

Auf Grund der äußerst geringen mittleren Dicke der erfindungsgemäßen Zinkmagnesiumpigmente von unter 1 $\mu$m, vorzugsweise von unter 700 nm, wie vorstehend angegeben, ist es möglich, eine hochwirksame Korrosionsschutzbeschichtung mit einer Gesamttrockendicke von vorzugsweise 10 bis 200 $\mu$m, vorzugsweise von 25 bis 150 $\mu$m, weiter bevorzugt von 30 bis 100 $\mu$m, aufzubringen. Als sehr geeignet hat sich eine Gesamttrockendicke von 10 bis 40 $\mu$m erwiesen.

Es hat sich überraschend gezeigt, dass Korrosionsschutzbeschichtungen, vorzugsweise auf Epoxidharzbasis oder Polyurethanharzbasis, die die erfindungsgemäßen plättchenförmigen Zinkmagnesiumpigmente, vorzugsweise in einer mittleren Dicke von etwa 80 nm bis 450 nm, weiter bevorzugt von etwa 100 nm bis 400 nm, noch weiter bevorzugt von 130 nm bis 350 nm, enthalten, für die Beschichtung von Flugzeugen besonders geeignet sind.

Korrosionsschutzbeschichtungen an Flugzeugen sind extremen Bedingungen ausgesetzt. Beispielsweise müssen diese Korrosionsschutzbeschichtungen Temperaturwechsel von +70°C bis -60°C in wenigen Minuten bestehen. Auch ist erforderlich, dass die Flugzeuglacke beständig sind gegenüber der in Reiseflughöhe auftretenden intensiven UV-Bestrahlung. Schließlich müssen Flugzeuglacke auch gegenüber chemischen und mechanischen Belastungen, wie beispielsweise gegenüber Kerosin- und Hydraulikflüssigkeit, Sandkörnern, Eiskristallen und schwingenden Tragflächen, beständig sein.

Die erfindungsgemäßen plättchenförmigen Zinkmagnesiumpigmente sind insbesondere zur Verwendung als Zinkmagnesiumpigmente in Lacken zur Lackierung von Flugzeugen geeignet.

Um das Gesamtgewicht eines Flugzeuges unter Berücksichtigung der erforderlichen Stabilität gering zu halten, werden im Flugzeugbau Aluminium-Legierungen eingesetzt. Zum einen findet als Aluminium-Legierung die als AA2024 bezeichnete Aluminium-Legierung Anwendung. Die Aluminium-Legierung AA2024 weist eine Dichte von 2,78 g/cm$^3$ auf und enthält in Aluminium etwa 4,3 bis 4,4 Gew.-% Kupfer, 0,5 bis 0,6 Gew.-% Mangan, 1,3 bis 1,5 Gew.-% Magnesium und weniger als etwa 0,5 Gew.-% Zink, Nickel, Chrom, Blei, und Wismut. Üblicherweise wird die Zusammensetzung der Aluminium-Legierung AA2024 mit AlCu4Mg1 angegeben. Diese Aluminium-Legierung besitzt die für den Flugzeugbau erforderlichen mechanischen Eigenschaften, jedoch eine schlechte Korrosionsbeständigkeit.

Eine weitere Aluminium-Legierung AA5754, die auch im Automobilbereich und Schiffsbau Anwendung findet, weist eine Dichte von etwa 2,66 g/cm$^3$ und enthält in Aluminium 2,6 bis 3,6 Gew.-%, Magnesium, 0,5 Gew.-%, Mangan, 0,4 Gew.-% Eisen, 0,4 Gew.-% Si, 0,3 Gew.-% Cr, 0,2 Gew.-% Zn, 0,15 Gew.-% Ti und 0,1 Gew.-% Cu. Üblicherweise wird die Zusammensetzung der Aluminium-Legierung AA5754 mit AlMg3 angegeben.

Das elektrochemische Standardpotential von Zink beträgt -0,76 V, wohingegen das elektrochemische Standardpotential von Aluminium -1,66 V beträgt. Mithin ist Zink edler als Aluminium, weshalb es bei einem direkten Kontakt von Zink und Aluminium unter beispielsweise feuchten Bedingungen, zu einer Auflösung von Aluminium kommen würde.

Das elektrochemische Standardpotential wird bei den erfindungsgemäßen plättchenförmigen Zinkmagnesiumlegierungspigmenten im Wesentlichen durch Zink und Magnesium, die die beiden Hauptbestandteile der erfindungsgemäß verwendeten Legierungen darstellen, gebildet.

Das elektrochemische Standardpotential von beispielsweise Mangan beträgt -1,18 V, von Beryllium -1,85 V, von Yttrium -2,37 V, von Lithium -3,04 V und von Zinn -0,14 V. Da diese Metalle jedoch maximal in einem Anteil von 7 mol-% in der zu verwendenden Legierung enthalten sind, ist deren Einfluss auf das elektrochemische Standardpotential gering.

Durch die Erhöhung des Anteils an Magnesium in der erfindungsgemäß verwendeten Zink-Legierung lässt sich das elektrochemische Standartpotential absenken, so dass ein effektiver Korrosionsschutz insbesondere im Hinblick auf die im Flugzeugbau verwendeten Aluminium-Legierungen gegeben ist.

Durch die plättchenförmige Struktur der erfindungsgemäßen Zinkmagnesiumpigmente können diese zum einen physikalisch effektiv als Barriereschutz und zum anderen effektiv als Opferanode, bedingt durch den flächigen Kontakt mit dem vor Korrosion zu schützenden Gegenstand, beispielsweise einem Flugzeug- oder Schiffsrumpf oder einer Karosserie, dienen.

Auf Grund der äußerst geringen Pigmentdicke der erfindungsgemäßen plättchenförmigen Zinkmagnesiumpigmente, können die erfindungsgemäßen plättchenförmigen Zinkmagnesiumpigmente in äußerst dünnen Beschichtungen, wie sie beispielsweise bei Flugzeugbeschichtungen erforderlich sind, mit Schichtdicken von etwa 30 μm und weniger verwendet werden.

Da die erfindungsgemäßen plättchenförmigen Zinkmagnesiumpigmente vorzugsweise eine Schichtdicke von weniger als 500 nm aufweisen, können sich in der Korrosionsschutzbeschichtung die erfindungsgemäßen plättchenförmigen Zinkmagnesiumpigmente nebeneinander und insbesondere mehrfach übereinander stapeln, sodass eine äußerst effektive physikalische Barriere gebildet wird. Bei einer Lackschichtdicke von 30 μm können mithin bei einer mittleren Pigmentdicke von weniger als 500 nm durchschnittlich bis zu 60 Lagen an erfindungsgemäßen plättchenförmigen Zinkmagnesiumpigmenten übereinander angeordnet sein, wodurch ein äußerst effektiver Korrosionsschutz bewirkt wird.

Die erfindungsgemäßen plättchenförmigen Zinkmagnesiumpigmente können selbstredend nicht nur bei Flugzeuglackierungen Anwendung finden, sondern auch bei Schiffs- oder Bootlackierungen und auch bei Fahrzeugrahmen. Unter Fahrzeugrahmen werden dabei Kraftfahrzeugkarosserien sowohl an Automobilen, Lastkraftwagen als auch Motorräder oder Motorrollern verstanden.

Ebenfalls können die erfindungsgemäßen plättchenförmigen Zinkmagnesiumpigmente beim Korrosionsschutz von Gebäuden, Fassaden, Fenster- und Türrahmen, Brücken, Windrädern, Strommasten, etc. verwendet werden.

In Folge dessen wird die der Erfindung zu Grunde liegende Aufgabe auch durch einen mit den erfindungsgemäßen plättchenförmigen Zinkmagnesiumpigmenten oder der erfindungsgemäßen Korrosionsschutzbeschichtung beschichteten Gegenstand gelöst. Der erfindungsgemäße Gegenstand wird dabei aus der Gruppe, die aus Flugzeug, Schiff, Boot, Fahrzeugrahmen, Dosen, Wandverkleidungen aus Metall, insbesondere aus Aluminium, Fahrräder, Gebäude, Fassade, Fenster- und Türrahmen, Strommast, Windrad und Brücke besteht, ausgewählt.

Besonders bevorzugt sind Gegenstände aus Aluminium oder Aluminium-Legierung oder Gegenstände, die mit Aluminium oder einer Aluminium-Legierung versehen sind. Somit handelt es sich bei dem Gegenstand vorzugsweise um Flugzeuge, Schiffe, Boote oder Fahrzeugkarosserien, insbesondere bevorzugt um Flugzeuge.

Die der Erfindung zu Grunde liegende Aufgabe wird ferner durch ein Verfahren zum Herstellen der erfindungsgemäßen plättchenförmigen Zinkmagnesiumpigmente gelöst. Das Verfahren weist dabei folgenden Schritt auf:

Mechanisches Verformen von nicht-plättchenförmigen Zinkmagnesiumpartikeln mit einem Gehalt von 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, wobei mindestens 2500 kJ pro kg plättchenförmigen Zinkmagnesiumpartikeln bei einer Geschwindigkeit von mindestens 600 kJ pro kg plättchenförmige Zinkmagnesiumpartikel pro Stunde in das Aggregat eingetragen werden, unter Verwendung von Mahlkörpern in eine Plättchenform.

Wie bereits vorstehend ausgeführt, besitzen die zur Herstellung der erfindungsgemäßen plättchenförmigen Zinkmagnesiumpigmente verwendeten Legierungen mit einem Anteil von 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, wobei der Anteil an Mn, Li, Be, Y, Sn und Mischungen hiervon beispielsweise weniger als 0,15 mol-% ist, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, eine geringe Duktilität und hohe Sprödigkeit.

Bei dem erfindungsgemäßen Verfahren werden nicht-plättchenförmige Metallpartikel, die vorzugsweise eine annähernd sphärische Geometrie aufweisen, verwendet. Die nicht-plättchenförmigen Metallpartikel der erfindungsgemäß verwendeten Zink-Magnesium-Legierung, die vorzugsweise eine annähernd sphärische Geometrie aufweisen, werden durch Verdüsen einer Metalllegierungsschmelze, die eine Zusammensetzung 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, wobei der Anteil an Mn, Li, Be, Y, Sn und Mischungen hiervon vorzugsweise weniger als 0,18 mol-%, mehr bevorzugt weniger als 0,15 mol-%, beträgt, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, auf herkömmliche Weise durch Verdüsen erhalten. Die nach der Verdüsung der Schmelze erhaltenen Metallpartikel sind in der Regel sphärisch und weisen einen mittleren Partikeldurchmesser in einem Bereich von 2 $\mu$m bis 100 $\mu$m, weiter bevorzugt von 5 $\mu$m bis 80 $\mu$m, noch weiter bevorzugt von 10 $\mu$m bis 40 $\mu$m auf.

Vorzugsweise weist das durch Verdüsung erhaltene Metallpulver eine enge Partikelgrößenverteilung auf. Es ist bevorzugt, dass die sphärischen Metallpartikel aus der erfindungsgemäß zu verwendenden Legierung einen $D_{10}$-Wert von 0,9 $\mu$m bis 6 $\mu$m, vorzugsweise von 1,0 bis 3,3 $\mu$m, einen $D_{50}$-Wert von 3 $\mu$m bis 25 $\mu$m, vorzugsweise von 4 $\mu$m bis 14 $\mu$m und einen $D_{90}$-Wert von 5 $\mu$m bis 39,5 $\mu$m, vorzugsweise von 6 $\mu$m bis 25 $\mu$m, aufweisen.

Die Erfinder haben überraschenderweise herausgefunden, dass eine plättchenförmige Verformung der nicht-plättchenförmigen Zinkmagnesiumpartikel erreicht werden kann, wenn eine große Menge an Energie in kurzer Zeit eingetragen wird. Ferner erwies es sich als vorteilhaft, wenn diese Energie nicht überwiegend in Form von insbesondere Stoßenergie, sondern möglichst vollständig in der Form von Reibenergie übertragen wird, wie dies insbesondere unter Verwendung einer Rührwerkskugelmühle erfolgt. Bei Verwendung einer herkömmlichen Kugelmühle wird die Energie überwiegend in Form von Stoßenergie übertragen, wenn zwei Mahlkörper, vorzugsweise Mahlkugeln, aufeinander stoßen und zwischen den Mahlkörpern befindliche Metallpartikel plastisch verformen. Im Falle von Reibenergie wird die Energie durch Abrollen zweier Mahlkörper, vorzugsweise Mahlkugeln, aneinander bewirkt, wobei zwischen den Mahlkugeln die nicht-plättchenförmigen Metallpartikel angeordnet sind. Alternativ kann auch ein Abrollen der Mahlkörper, vorzugsweise Mahlkugeln, zwischen Wandung der Mühle und dem Mahlkörper erfolgen. Insbesondere bevorzugt im Sinne der vorliegenden Erfindung wird daher als Mahlaggregat eine Rührwerkskugelmühle eingesetzt.

Eine Rührwerkskugelmühle funktioniert nach dem Rotor-Stator Prinzip und unterscheidet sich dadurch deutlich von der normalerweise unter dem Begriff Kugelmühle verstandenen Mühlenform, auch wenn sie begrifflich gesehen eine Sonderform der Kugelmühle darstellt.

Rührwerkskugelmühlen bestehen aus einem vertikal oder horizontal angeordneten, meist zylindrischen Behälter, der zu 50 bis 90 Vol.-%, vorzugsweise 70 bis 90 Vol.-%, mit Mahlkörpern, die zumeist aus Stahl, Glas oder verschleißfesten keramischen Materialien bestehen, gefüllt ist. Dieser Behälter stellt den Stator dar. Den Rotor bildet ein Rührwerk mit geeigneten Rührelementen (Stäben oder Scheiben) oder ein glattwandiger Rührkörper. Der Rührkörper wird angetrieben und sorgt für eine intensive Bewegung der Mahlkörper. Die Mahlgutsuspension, d.h. die nicht-plättchenförmigen ZnMg-Legierungspartikel, wird kontinuierlich durch den Mahlraum geleitet. Dabei werden die suspendierten ZnMg-Legierungspartikel durch Prall- und vor allem Scherkräfte zwischen den Mahlkörpern verformt und dispergiert. Am Austrag der Mühle erfolgt die Trennung von Mahlgut und Mahlkörpern mittels eines geeigneten Trennsystems, beispielsweise eines Siebs.

Die Rührwerkskugelmühle bewirkt, verglichen mit einer Kugelmühle, die zu etwa 30 bis 40 Vol.-% mit Mahlkörpern befüllt ist, eine schonendere plastische Verformung der ZnMg-Partikel vorwiegend durch Scherkräfte.

Um eine langsame Verformung der nicht-plättchenförmigen Metallpartikel zu den erfindungsgemäßen plättchenförmigen Zinkmagnesiumpigmenten zu bewirken, ohne dass es dabei zu einem wesentlichen Abrieb bzw. einer Zerkteilung der nicht-plättchenförmigen Metallpartikel kommt, werden die Verfahrensparameter vorzugsweise derart eingestellt, dass der Energieeintrag mindestens 2500 kJ pro kg plättchenförmigen Zinkmagnesiumpartikeln bei einer Geschwindigkeit von mindestens 600 kJ pro kg plättchenförmige Zinkmagnesiumpartikel pro Stunde beträgt.

Insbesondere ist es bei den vorgenannten Ausführungsformen bevorzugt, dass mindestens 3300 kJ pro kg plättchenförmigen Zinkmagnesiumpartikeln (kJ/kg) bei einer Geschwindigkeit von mindestens 680 kJ pro kg plättchenförmige Zinkmagnesiumpartikel pro Stunde (kJ/kg·h), mehr bevorzugt mindestens 3700 kJ/kg bei einer Geschwindigkeit von mindestens 730 kJ/kg·h, noch mehr bevorzugt mindestens 4250 kJ/kg bei einer Geschwindigkeit von mindestens 800 kJ/kg·h und noch mehr mindestens 4700 kJ/kg bei einer Geschwindigkeit von mindestens 835 kJ/kg·h, eingetragen werden.

Dem mechanischen Verformen können Verfahrensschritte angeschlossen sein, wie das Abtrennen der plättchenförmigen Zinkmagnesiumpigmente. Weiter kann sich optional ein Klassierungsschritt anschließen, bei dem eine gewünschte Partikelgrößenverteilung der plättchenförmigen Zinkmagnesiumpigmente eingestellt wird.

Das Klassieren, beispielsweise zur Abtrennung von etwaig vorhandenem Feinanteil, beispielsweise Abrieb, oder zur Einstellung eines gewünschten Spans $\Delta D$, kann beispielsweise mittels Zyklon, Sieben, etc. durchgeführt werden.

Die Erfindung wird nachfolgend in Bezug auf die beigefügten Figuren und Beispiele näher erläutert, ohne darauf begrenzt zu sein.

Abbildungen

Abbildungen 1 und 2 zeigen rasterelektronenmikroskopische Aufnahme von plättchenförmigen Pigmenten gemäß Beispiel 2.

Abbildungen 3 und 4 zeigen rasterelektronenmikroskopische Aufnahme von plättchenförmigen Pigmenten gemäß Vergleichsbeispiel 3.

Beispiele

Beispiel 1: Herstellung Zinkmagnesiumpartikel (51,4 mol-% Zink, 48,6 mol-% Magnesium)

296 kg Zink und 104 kg Magnesium wurden in unter Argon inertisierten Schmelztiegel bei einer Temperatur von > 650 °C geschmolzen. Die Schmelze wurde sodann durch eine Düse in einen Sprühbunker verdüst unter Erhalt eines Gries mit einer Partikelgrößenverteilung mit einem $D_{10}$ von 7,2 $\mu$m, einem $D_{50}$ von 17,3 $\mu$m und einem $D_{90}$ von 35,3 $\mu$m.

Beispiel 2: Herstellung von erfindungsgemäßen Zinkmagnesiumpigmenten

9 kg des gemäß Beispiel 1 hergestellten Zink-Magnesium-Grieses wurden in 32 Liter Isopropanol (Lösemittel) in einer Rührwerkskugelmühle Netzsch RWK LMZ10 bei einem spezifischen Energieeintrag auf Material $E_m(t)$ von 4252,5 kJ/kg vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben ($D_{10}$: 3,0 $\mu$m, $D_{50}$: 6,9 $\mu$m, $D_{90}$: 13,3 $\mu$m) und die mittlere Pigmentdicke ($h_{50}$ = 300 nm) mittels REM, wie oben und in der DE 103 15 775 A1 (Abs. [0125] bis [0127]) beschrieben, bestimmt.

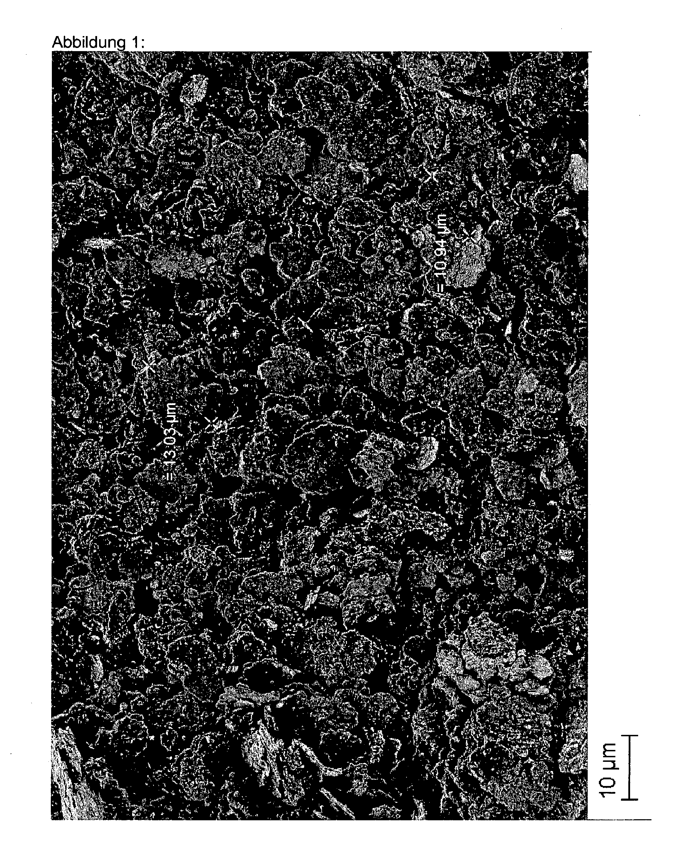

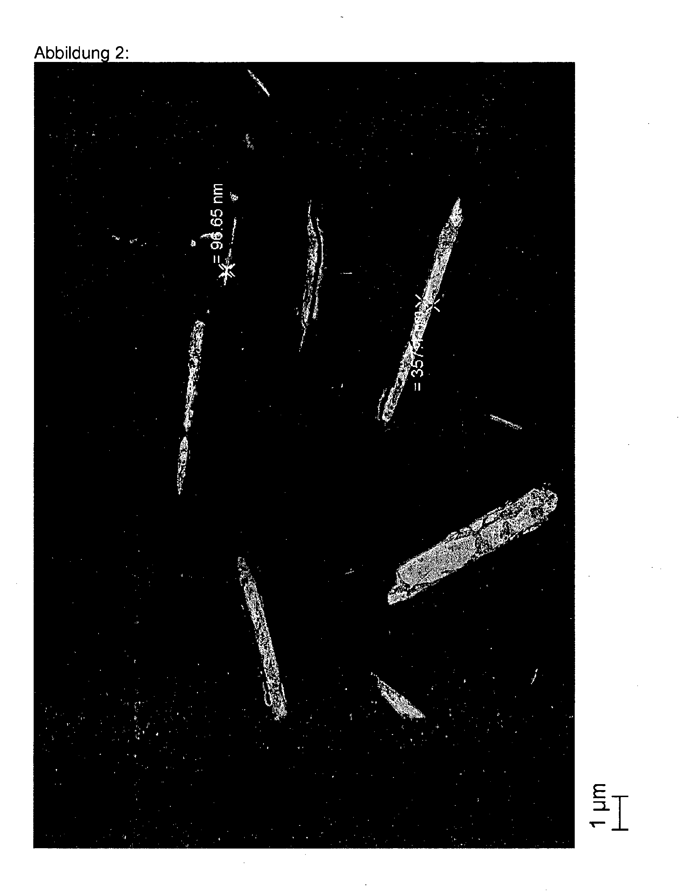

Aus Abbildungen 1 und 2 ist ersichtlich, dass die erhaltenen Pigmente plättchenförmig ausgeformt sind und nahezu keine Bruchstücke oder Abrieb enthielten. Ferner wiesen die erhaltenen Partikel eine sehr dünne mittlere Pigmentdicke auf. Sie sind daher beispielsweise besonders gut geeignet, um ein eine sehr dünne, hochwirksame Korrosionsbeschichtung eingearbeitet zu werden.

Vergleichsbeispiel 3: Vermahlung von Zinkmagnesiumpartikeln unter Standardbedingungen

9 kg des gemäß Beispiel 1 hergestellten Zink-Magnesium-Grieses wurden in 32 Liter Testbenzin (Lösemittel) in einer Kugelmühle (Abmessungen: Länge: 100. cm, Durchmesser: 100 cm) und Mahlkugeln aus Stahl (Durchmesser 12 mm) mit einer Umdrehungsgeschwindigkeit von 40 Umdrehungen pro Minute für 10 Stunden vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben ($D_{10}$: 2,6 $\mu$m, $D_{50}$: 5,0 $\mu$m, $D_{90}$: 9,2 $\mu$m) und die mittlere Pigmentdicke ($h_{50}$ = 2 $\mu$m) mittels REM, wie oben und in der DE 103 15 775 A1 (Abs. [0125] bis [0127]) beschrieben, bestimmt.

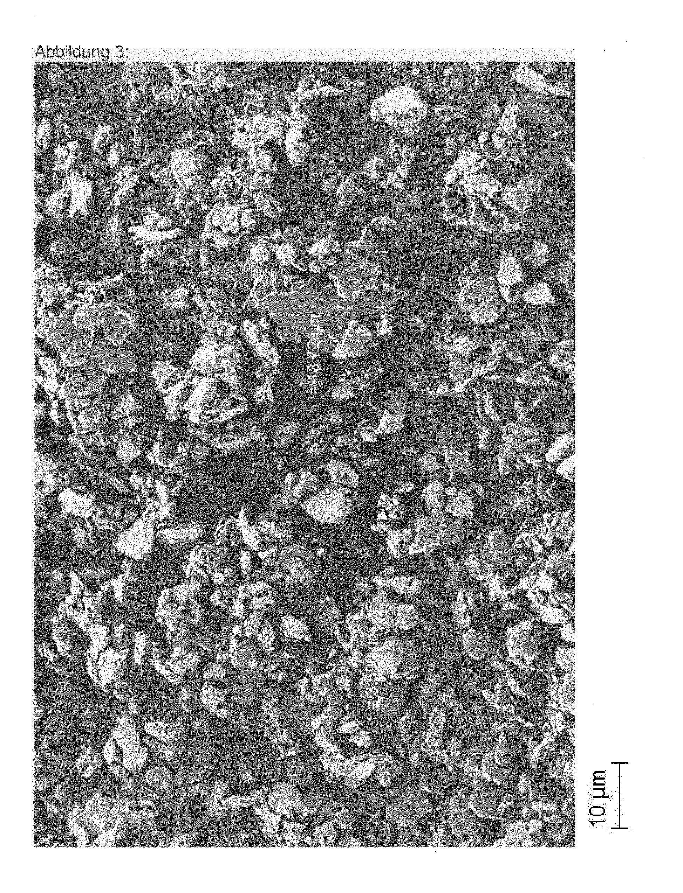

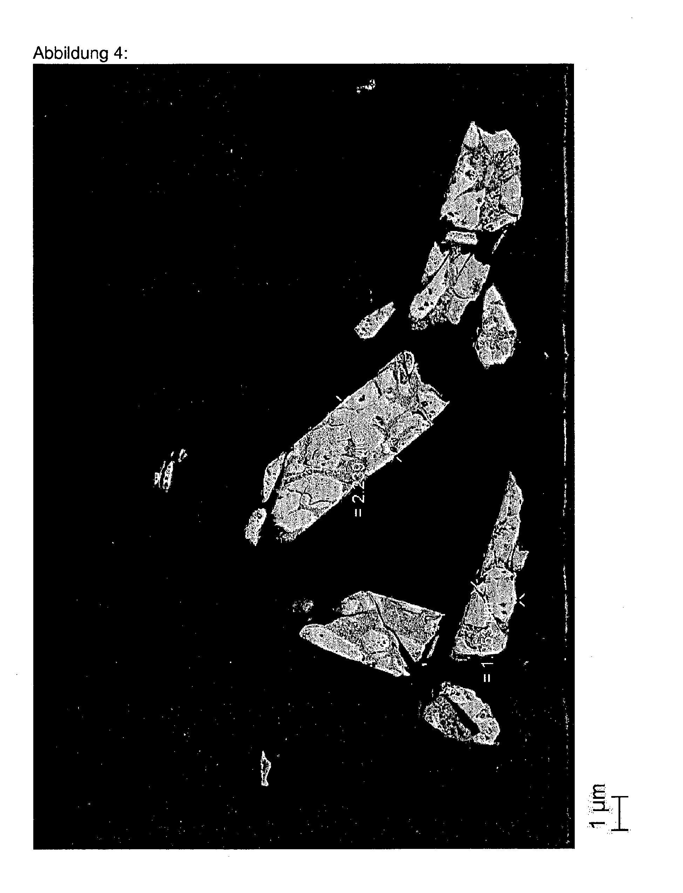

Aus Abbildungen 3 und 4 ist ersichtlich, dass die erhaltenen Partikel Bruchstücke und Abrieb darstellen. Ferner wiesen die erhaltenen Partikel eine zu große mittlere Pigmentdicke von 2 $\mu$m auf. Eine längere Mahldauer führte nicht zu plättchenförmigen Pigmenten mit geringerer mittlerer Pigmentdicke, sondern lediglich zu einer weiteren Zerkleinerung der Partikel.

Beispiel 4: Herstellung weiterer Zinkmagnesiumpigmenten

Analog Beispiel 2 bzw. Vergleichsbeispiel 3 wurden unter leicht veränderten Bedingungen, sowie gegebenenfalls dem Einsatz anderer Grieße (z.B. $D_{10}$ = 3,8 $\mu$m, $D_{50}$ = 8,4 $\mu$m und $D_{90}$ = 15,6 $\mu$m) weitere Zinkmagnesiumpigmente

hergestellt. Hierbei wurden beispielsweise die folgenden Zinkmagnesiumpigmente erhalten:

| | $D_{10}$ | $D_{50}$ | $D_{90}$ | $h_{50}$ |
|---|---|---|---|---|
| Beispiel 4-1 | 1,7 | 4,3 | 8,9 | 300 nm |
| Vergleichsbeispiel 4-2 | 5,0 | 12,7 | 22,3 | 2000 nm |
| Beispiel 4-3 | 2,6 | 5,0 | 9,2 | 900 nm |
| Vergleichsbeispiel 4-4 | 4,1 | 10,1 | 20,0 | 1100 nm |

Anwendungsbeispiel 1:

Die entsprechenden Pigmente wurden in ein Testlacksystem umfassend einen Basislack und einen Härter eingearbeitet.

Das Testlacksystem ist folgendermaßen zusammengesetzt:

| Basislack | |
|---|---|
| Ethyl-3-ethoxypropionat | 4,6 g |
| Methylamylketon | 4,0 g |
| Cymel UI-38-I (Cytec Surface Specialties) | 0,8 g |
| DEN 431 (DOW Chemical) | 30 g |
| Bentone 38 10% (Elementis Specialties) in 85 % Xylol und 5 % Ethanol | 20 g |
| MIN-U-Sil 10 (US Silica) | 6 g |
| Bariumsulfat | 30 g |
| Methylethylketon | 5,5 g |
| BYK-361-N (BYK-Chemie GmbH) | 1,2 g |
| Z-6040 Silan (Dow Corning) | 1,7 g |
| Pigmentpaste (91 % Feststoffgehalt) | 75 g |
| Härter | |
| Xylene | 7,2 |
| n-Butanol | 2,9 |
| Aradur 283 (Huntsman) | 23,0 |
| EH 637 Beckopox (Cytec Surface Specialties) | 5,7 |
| Ancamine K54 (Air Products) | 2,6 |
| Z-6121 Silan (Dow Corning) | 0,8 |

Nachfolgend wurden die beschichteten Bleche dem Filiform-Test gemäß DIN-EN-3665 und dem Salzsprühtest gemäß ISO 9227 unterzogen. Hierbei wurden die folgenden Ergebnisse erhalten.

| | Filiform-Test (ISO 4623-2) | Salzsprühtest (ISO 9227) |
|---|---|---|
| Beispiel 4-1 | bestanden | bestanden |
| Vergleichsbeispiel 4-2 | Kriterien deutlich überschritten | Kriterien deutlich überschritten |
| Beispiel 4-3 | Kriterien leicht überschritten | bestanden |
| Vergleichsbeispiel 4-4 | Kriterien deutlich überschritten | Kriterien leicht überschritten |

**Patentansprüche**

1. Plättchenförmige Zinkmagnesiumpigmente, wobei die plättchenförmigen Zinkmagnesiumpigmente 40,8 bis 67,8 mol-% Zink, 32,2 bis 59,2 mol-% Magnesium und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren und die mittlere Dicke $h_{50}$ der Pigmente kleiner als 1 μm ist.

2. Plättchenförmige Zinkmagnesiumpigmente gemäß Anspruch 1, wobei die plättchenförmigen Zinkmagnesiumpigmente 45,6 bis 57,8 mol-% Zn, 42,2 bis 54,4 mol-% Mg und 0 bis 7 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren enthalten, wobei Zn, Mg, Mn, Be, Y, Li, Sn, Al, Ti, Fe und Cu mindestens 93 Gew.-% der Zinkmagnesiumpigmente darstellen.

3. Plättchenförmige Zinkmagnesiumpigmente gemäß Anspruch 1 oder 2, wobei die plättchenförmigen Zinkmagnesiumpigmente weniger als 0,15 mol-% an Mn, Li, Be, Y, Sn und Mischungen aufweisen, jeweils bezogen auf die Gesamtmolmenge der Elemente Zn, Mg, Mn, Be, Y, Li, Sn, Al, Ti, Fe und Cu.

4. Plättchenförmige Zinkmagnesiumpigmente gemäß einem der vorhergehenden Ansprüche, wobei die plättchenförmigen Zinkmagnesiumpigmente eine mittlere Dicke aus einem Bereich von 90 nm bis unter 700 nm aufweisen.

5. Plättchenförmige Zinkmagnesiumpigmente gemäß einem der vorhergehenden Ansprüche, wobei die plättchenförmigen Zinkmagnesiumpigmente einen mittleren Durchmesser $D_{50}$ aus einem Bereich von 3 bis 25 μm aufweisen.

6. Plättchenförmige Zinkmagnesiumpigmente gemäß einem der vorhergehenden Ansprüche, wobei die plättchenförmigen Zinkmagnesiumpigmente ein Aspektverhältnis in einem Bereich von 10 bis 200 aufweisen.

7. Plättchenförmige Zinkmagnesiumpigmente gemäß einem der vorhergehenden Ansprüche, wobei die plättchenförmigen Zinkmagnesiumpigmente eine Größenverteilung mit einem Span ΔD gemäß Formel (II)

$$\text{Span } \Delta D = (D_{90}\text{-}D_{10})/D_{50} \qquad\qquad (II)$$

von 1,0 bis 2,3 aufweisen.

8. Plättchenförmige Zinkmagnesiumpigmente gemäß einem der vorhergehenden Ansprüche, wobei die Zinkmagnesiumpigmente 47,3 bis 54,2 mol-% Zn, 45,8 bis 53,7 mol-% Mg und 0 bis 4,6 mol-% Mn, Li, Be, Y, Sn, Al, Ti, Fe, Cu und Mischungen hiervon enthalten, jeweils bezogen auf die Gesamtmolmenge der Elemente Zn, Mg, Mn, Be, Y, Li., Sn, Al, Ti, Fe und Cu, wobei sich die mol-%-Anteile zu 100 mol-% aufsummieren, die mittlere Dicke $h_{50}$ der Pigmente kleiner als 700 nm ist und wobei Zn, Mg, Mn, Be, Y, Li, Sn, Al, Ti, Fe und Cu mindestens 93 Gew.-% der Zinkmagnesiumpigmente darstellen, bezogen auf deren Gesamtgewicht.

9. Plättchenförmige Zinkmagnesiumpigmente gemäß einem der vorhergehenden Ansprüche, wobei die plättchenförmigen Zinkmagnesiumpigmente durch mechanische Verformung mittels Rührwerkskugelmühlen als Vermahlungsaggregat erhalten sind.

10. Korrosionsschutzbeschichtung, wobei die Korrosionsschutzbeschichtung plättchenförmige Zinkmagnesiumpigmente gemäß einem der vorhergehenden Ansprüche enthält.

11. Gegenstand umfassend Zinkmagnesiumpigmente gemäß einem der Ansprüche 1 bis 9 oder eine Korrosionsschutzbeschichtung gemäß Anspruch 10 aufweist.

12. Gegenstand gemäß Anspruch 11, wobei der Gegenstand aus der Gruppe, die aus Flugzeug, Schiff, Boot, Fahrzeugrahmen, Gebäude, Fassade, Fenster- und Türrahmen, Brücke, Strommast und Windrad besteht, ausgewählt ist.

13. Gegenstand gemäß Anspruch 11 oder 12, wobei der Gegenstand aus Aluminium oder einer Aluminiumlegierung besteht oder Aluminium oder eine Aluminiumlegierung aufweist.

**14.** Verfahren zum Herstellen von plättchenförmigen Zinkmagnesiumpigmenten gemäß einem der Ansprüche 1 bis 9, wobei das Verfahren folgenden Schritt aufweist:

Mechanisches Verformen von nicht-plättchenförmigen Zinkmagnesiumpigmenten umfassend 40,8 bis 67,8 mol-% Zn, 32,2 bis 59,2 mol-% Mg und 0 bis 7 mol-% Mn, Li, Be, Y, Sn, Al, Ti, Fe, Cu und Mischungen hiervon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren,
wobei ein Energieeintrag von mindestens 2500 kJ pro kg plättchenförmigen Zinkmagnesiumpartikeln bei einer Geschwindigkeit von mindestens 600 kJ pro kg plättchenförmige Zinkmagnesiumpartikel pro Stunde erfolgt.

**15.** Verwendung von Zinkmagnesiumpigmenten gemäß einem der Ansprüche 1 bis 9 beim Korrosionsschutz eines Gegenstandes, der aus Aluminium oder einer Aluminiumlegierung besteht oder Aluminium oder eine Aluminiumlegierung aufweist.

**Claims**

**1.** Platelet-shaped zinc magnesium pigments, which platelet-shaped zinc magnesium pigments contain 40.8 to 67.8 mol % zinc, 32.2 to 59.2 mol % magnesium and 0 to 7 mol % Mn, Li, Be, Y, Sn, Al, Ti, Fe, Cu and mixtures thereof relative to the total molar quantity of the elements Zn, Mg, Mn, Be, Y,Li, Sn, Al, Ti, Fe and Cu respectively, where the molar % amounts add up to 100 mol %, and the mean thickness $h_{50}$ of the pigments is less than 1 $\mu$m.

**2.** Platelet-shaped zinc magnesium pigments as claimed in claim 1, which platelet-shaped zinc magnesium pigments contain 45.6 to 57.8 mol % Zn, 42.2 to 54.4 mol % Mg and 0 to 7 mol % Mn, Li, Be, Y, Sn, Al, Ti, Fe, Cu and mixtures thereof relative to the total molar quantity of the elements Zn, Mg, Mn, Be, Y, Li,Sn, Al, Ti, Fe and Cu respectively, where the molar % amounts add up to 100 mol %, and Zn, Mg, Mn, Be, Y, Li,Sn, Al, Ti, Fe and Cu represent at least 93 % by weight of the zinc magnesium pigments.

**3.** Platelet-shaped zinc magnesium pigments as claimed in claim 1 or 2, which platelet-shaped zinc magnesium pigments contain less than 0.15mol % of Mn, Li, Be, Y, Sn and mixtures thereof relative to the total molar quantity of the elements Zn, Mg, Mn, Be, Y, Li,Sn, Al, Ti, Fe and Cu respectively.

**4.** Platelet-shaped zinc magnesium pigments as claimed in one of the preceding claims, which platelet-shaped zinc magnesium pigments have a mean thickness within a range of from 90 nm to less than 700 nm.

**5.** Platelet-shaped zinc magnesium pigments as claimed in one of the preceding claims, which platelet-shaped zinc magnesium pigments have a mean diameter $D_{50}$ within a range of 3 to 25 $\mu$m.

**6.** Platelet-shaped zinc magnesium pigments as claimed in one of the preceding claims, which platelet-shaped zinc magnesium pigments have an aspect ratio within a range of 10 to 200.

**7.** Platelet-shaped zinc magnesium pigments as claimed in one of the preceding claims, which platelet-shaped zinc magnesium pigments have a size distribution with a span $\Delta D$ based on formula (II)

$$\text{Span } \Delta D = (D_{90} - D_{10})/D_{50} \quad \text{(II)}$$

of 1.0 to 2.3.

**8.** Platelet-shaped zinc magnesium pigments as claimed in one of the preceding claims, which platelet-shaped zinc magnesium pigments contain 47.3 to 54.2 mol % Zn, 45.8 to 53.7 mol % Mg and 0 to 4.6 mol % Mn, Li, Be, Y, Sn, Al, Ti, Fe, Cu and mixtures thereof relative to the total molar quantity of the elements Zn, Mg, Mn, Be, Y,Li, Sn, Al, Ti, Fe and Cu respectively, where the molar % amounts add up to 100 mol %, and the mean thickness $h_{50}$ of the pigments is less than 700 nm, and Zn, Mg, Mn, Be, Y,Li, Sn, Al, Ti, Fe and Cu represent at least 93 % by weight thereof.

**9.** Platelet-shaped zinc magnesium pigments as claimed in one of the preceding claims, which platelet-shaped zinc magnesium pigments are obtained by mechanical deformation using agitating ball mills as the grinding unit.

10. Anti-corrosion coating, which anti-corrosion coating contains platelet-shaped zinc magnesium pigments as claimed in one of the preceding claims.

11. Object comprising zinc magnesium pigments as claimed in one of claims 1 to 9 or an anti-corrosion coating as claimed in claim 10.

12. Object as claimed in claim 11, which object is selected from the group comprising aircraft, ships, boats, vehicle frames, buildings, facades, window and door frames, bridges, electric pylons and wind turbines.

13. Object as claimed in claim 11 or 12, which object is made from aluminium or an aluminium ally or contains aluminium or an aluminium alloy.

14. Method of producing platelet-shaped zinc magnesium pigments as claimed in one of claims 1 to 9, which method comprises the following step:

mechanically deforming non-platelet-shaped zinc magnesium pigments comprising 40.8 to 67.8 mol % Zn, 32.2 to 59.2 mol % Mg and 0 to 7 mol % Mn, Li, Be, Y, Sn, Al, Ti, Fe, Cu and mixtures thereof relative to the total molar quantity of the elements Zn, Mg, Mn, Be, Y,Li, Sn, Al, Ti, Fe and Cu respectively, where the mol % amounts add up to 100 mol %,
and an energy input of at least 2500 kJ per kg of platelet-shaped zinc magnesium particles takes place at a rate of at least 600 kJ per kg of platelet-shaped zinc magnesium particles per hour.

15. Use of platelet-shaped zinc magnesium pigments as claimed in one of claims 1 to 9 to protect an object made from aluminium or an aluminium alloy or containing aluminium or an aluminium alloy against corrosion.

## Revendications

1. Pigments lamellaires à base de zinc et de magnésium, dans lesquels les pigments lamellaires à base de zinc et de magnésium comprennent 40,8 à 67,8 % en moles de zinc, 32,2 à 59,2 % en moles de magnésium et 0 à 7 % en moles de Mn, Li, Be, Y, Sn, Al, Ti, Fe, Cu et de mélanges de ceux-ci, chacun par rapport à la quantité totale en moles des éléments Zn, Mg, Mn, Be, Y, Li, sn, Al, Ti, Fe et Cu, la somme des pourcentages en moles faisant 100 % en moles, et l'épaisseur moyenne $h_{50}$ des pigments étant inférieure à 1 $\mu$m.

2. Pigments lamellaires à base de zinc et de magnésium selon la revendication 1, dans lesquels les pigments lamellaires à base de zinc et de magnésium comprennent 45,6 à 57,8 % en moles de Zn, 42,2 à 54,4 % en moles de Mg et 0 à 7 % en moles de Mn, Li, Be, Y, Sn, Al, Ti, Fe, Cu et de mélanges de ceux-ci, chacun par rapport à la quantité totale en moles des éléments Zn, Mg, Mn, Be, Y, Li, Sn, Al, Ti, Fe et Cu, la somme des pourcentages en moles étant de 100 % en moles, où Zn, Mg, Mn, Be, Y, Li, Sn, Al, Ti, Fe et Cu représentent au moins 93 % en poids des pigments à base de zinc et de magnésium.

3. Pigments lamellaires à base de zinc et de magnésium selon la revendication 1 ou 2, dans lesquels les pigments lamellaires à base de zinc et de magnésium comprennent moins de 0,15 % en moles de Mn, Li, Be, Y, Sn et de mélanges de ceux-ci, chacun par rapport à la quantité totale en moles des éléments Zn, Mg, Mn, Be, Y, Li, Sn, Al, Ti, Fe et Cu.

4. Pigments lamellaires à base de zinc et de magnésium selon l'une des revendications précédentes, dans lesquels les pigments lamellaires à base de zinc et de magnésium ayant une épaisseur moyenne comprise dans la plage de 90 nm à moins de 700 nm.

5. Pigments lamellaires à base de zinc et de magnésium selon l'une des revendications précédentes, dans lesquels les pigments lamellaires à base de zinc et de magnésium présentant un diamètre moyen $D_{50}$ compris dans la plage de 3 à 25 $\mu$m.

6. Pigments lamellaires à base de zinc et de magnésium selon l'une des revendications précédentes, dans lesquels les pigments lamellaires à base de zinc et de magnésium présentent un rapport d'aspect compris dans la plage de 10 à 200.

7. Pigments lamellaires à base de zinc et de magnésium selon l'une des revendications précédentes, dans lesquels les pigments lamellaires à base de zinc et de magnésium présentant une distribution granulométrique ayant une polydispersité $\Delta D$ selon la formule (II)

$$\text{Polydispersité } \Delta D = (D_{90}-D_{10})/D_{50} \qquad (II)$$

de 1,0 à 2,3.

8. Pigments lamellaires à base de zinc et de magnésium selon l'une des revendications précédentes, dans lesquels les pigments à base de zinc et de magnésium contenant 47,3 à 54,2 % en moles de Zn, 45,8 à 53,7 % en moles de Mg et 0 à 4,6 % en moles de Mn, Li, Be, Y, Sn, Al, Ti, Fe, Cu et de mélanges de ceux-ci, chacun par rapport à la quantité totale en moles des éléments Zn, Mg, Mn, Be, Y, Li, Sn, Al, Ti, Fe et Cu, la somme des pourcentages en moles étant de 100 % en moles, l'épaisseur moyenne $h_{50}$ des pigments étant inférieure à 700 nm, et Zn, Mg, Mn, Be, Y, Li, Sn, Al, Ti, Fe et Cu représentant au moins 93 % en poids des pigments à base de zinc et de magnésium, par rapport à leur poids total.

9. Pigments lamellaires à base de zinc et de magnésium selon l'une des revendications précédentes, dans lesquels les pigments lamellaires à base de zinc et de magnésium étant obtenus par déformation mécanique à l'aide de broyeurs à billes, munis d'un agitateur, servant d'équipement broyeur.

10. Revêtement anticorrosion, dans lequel le revêtement anticorrosion comprend des pigments lamellaires à base de zinc et de magnésium selon l'une des revendications précédentes.

11. Objet comprenant des pigments à base de zinc et de magnésium selon l'une des revendications 1 à 9 ou un revêtement anticorrosion selon la revendication 10.

12. Objet selon la revendication 11, dans lequel l'objet est choisi dans le groupe consistant les avions, les navires, les bateaux, les châssis de véhicules, les bâtiments, les façades, les cadres de fenêtre et de porte, les ponts, les pylônes électriques et les éoliennes.

13. Objet selon la revendication 11 ou 12, dans lequel l'objet est constitué d'aluminium ou d'un alliage d'aluminium, ou comprenant de l'aluminium ou un alliage d'aluminium.

14. Procédé de fabrication de pigments lamellaires à base de zinc et de magnésium selon l'une des revendications 1 à 9, dans lequel le procédé comprend les étapes suivantes :

déformation mécanique de pigments non-lamellaires à base de zinc et de magnésium, comprenant 40,8 à 67,8 % en moles de Zn, 32,2 à 59,2 % en moles de Mg et 0 à 7 % en moles de Mn, Li, Be, Y, Sn, Al, Ti, Fe, Cu et de mélanges de ceux-ci, chacun par rapport à la quantité totale en moles des éléments Zn, Mg, Mn, Be, Y, Li, Sn, Al, Ti, Fe et Cu, la somme des pourcentages en moles étant de 100 % en moles, au cours de laquelle a lieu un apport d'énergie d'au moins 2500 kJ par kg de particules lamellaires à base de zinc et de magnésium, pour une vitesse d'au moins 600 kJ par kg de particules lamellaires à base de zinc et de magnésium par heure.

15. Utilisation de pigments à base de zinc et de magnésium selon l'une des revendications 1 à 9 pour la protection contre la corrosion d'un objet qui est constitué d'aluminium ou d'un alliage d'aluminium ou comprend de l'aluminium ou un alliage d'aluminium.

Abbildung 1:

Abbildung 2:

Abbildung 3:

Abbildung 4:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008125610 A1
- WO 2010043708 A1
- KR 2010023855 A
- DE 102009028667 A1
- GB 846904 A
- DE 102007021602 A1
- EP 2246396 A1
- US 2877126 A
- US 20040191555 A1
- EP 2060345 A1
- US 8114527 B2
- DE 10315775 A1